# EUROPÄISCHE PATENTANMELDUNG

(11) **EP 4 539 212 A2**
(43) Veröffentlichungstag der Anmeldung: **16.04.2025**
(21) Anmeldenummer: 25158232.6
(22) Anmeldetag: 18.12.2018
(51) Int. Cl.: H01M 10/658

(54) **BATTERIE MIT MEHRSCHICHTIGEM DÄMMELEMENT UND VERWENDUNG EINES MEHRSCHICHTEN DÄMMELEMENTS ZUR THERMISCHEN ISOLIERUNG EINER BATTERIE**

(30) Priorität: 21.12.2017 DE 102017011886; 19.01.2018 DE 102018000421
(62) Teilanmeldung aus: 18842771.0
(71) Anmelder: h.k.o. Isolier- und Textiltechnik GmbH, 46049 Oberhausen (DE)
(72) Erfinder: STUDE, Ulrich, 46049 Oberhausen (DE); STÖCKMANN, Carsten, 45883 Gelsenkirchen (DE)
(74) Vertreter: Von Rohr Patentanwälte Partnerschaft mbB

(57) **Zusammenfassung**

Es wird eine Batterie mit einem mehrschichtigen Wärmedämmelement zur thermischen Isolierung der Batterie vorgeschlagen, mit einer ersten Deckschicht, mit einer zweiten Deckschicht und mit einer zwischen den Deckschichten angeordneten kompressiblen und/oder biegsamen Zwischenlage, die wenigstens eine hitzebeständige Faserschicht aufweist, wobei die Faserschicht aus einem vernadelten Faservlies gebildet ist.

## Beschreibung

Die vorliegende Erfindung betrifft ein mehrschichtiges Wärmedämmelement, eine Batterie mit einem mehrschichtigen Wärmedämmelement gemäß dem Oberbegriff des Anspruchs 1 sowie eine Verwendung eines mehrschichtigen Wärmedämmelements gemäß dem Oberbegriff des Anspruchs 15.

Unter dem Begriff "Wärmedämmelement" ist bei der vorliegenden Erfindung vorzugsweise ein flächiges Bauteil aus einem Schichtaufbau, insbesondere einem Schichtpaket, zu verstehen, das zur thermischen Isolierung einer Batterie ausgebildet ist bzw. eingesetzt wird. Insbesondere ist das Wärmedämmelement dazu ausgebildet, bei einer unkontrollierten bzw. überhöhten Wärmeentwicklung in der Batterie die Abgabe von Wärme an die Umgebung, insbesondere einen Fahrzeuginnenraum, zu reduzieren bzw. zu verzögern und/oder die Ausbreitung von Wärme in der Batterie einzudämmen bzw. zu reduzieren oder zu verzögern.

Unter dem Begriff "Batterie" ist bei der vorliegenden Erfindung ein insbesondere wiederaufladbares Speicherelement bzw. Sekundärelement zur Bereitstellung elektrischer Energie durch Umwandlung chemischer Energie zu verstehen. Die Batterie ist vorzugsweise aus mehreren zusammengeschalteten Akkumulator-Zellen bzw. Zellblöcken, also Batteriezellen, aufgebaut.

Insbesondere ist die Batterie als Traktionsbatterie bzw. zum Antrieb von Elektrofahrzeugen ausgebildet und/oder als Lithium-Ionen-Batterie ausgeführt. Hier ist eine zuverlässige bzw. effektive Wärmeisolierung wichtig, um bei einer Überhitzung der Batterie, beispielsweise infolge eines Verkehrsunfalls, die Insassen des Fahrzeugs zu schützen, und zwar zumindest bis zum Eintreffen von Rettungskräften.

Gerade Lithium-Ionen-Batterien weisen aufgrund ihrer chemischen Zusammensetzung eine vergleichsweise hohe Instabilität auf. Kommt es in einer Batteriezelle zu einem lokalen Kurzschluss der internen Elektroden, beispielsweise durch eine Verunreinigung des die Elektroden trennenden Separators durch eingeschlossene Fremdpartikel und/oder eine mechanische Einwirkung oder Beschädigung, heizt der starke Kurzschlussstrom die Batteriezelle in kurzer Zeit bis auf 800 °C, mitunter bis auf 1300 °C, auf. Dieser Vorgang wird als thermisches Durchgehen ("thermal runaway") bezeichnet. Das thermische Durchgehen einer Batteriezelle kann leicht bzw. schnell auf weitere, benachbarte Batteriezellen übergreifen, insbesondere da der Separator bereits bei relativ niedrigen Temperaturen, beispielsweise über 120 °C, an Stabilität verliert und daher Kurzschlüsse in benachbarten Batteriezellen schnell auftreten können. Dies führt zu einer unaufhaltsamen Kettenreaktion, wobei die in der Batterie gespeicherte Energie in kurzer Zeit, zumeist explosionsartig und unter Freisetzung von Fragmenten, abgegeben wird.

Vor diesem Hintergrund ist es wünschenswert, eine Batteriezelle, die benachbart zu einer durchgehenden bzw. überhitzenden Batteriezelle angeordnet ist, so lange wie möglich unterhalb einer bestimmten Grenztemperatur, vorzugsweise von 120 °C, insbesondere von 80 °C, zu halten. Oberhalb von 80 °C wird der Alterungsprozess der Batteriezelle nämlich erheblich beschleunigt und oberhalb von 120 °C beginnt oft ein Aufschmelzen des Separators in der Batteriezelle, einhergehend mit irreversiblen Schädigungen bzw. Kurzschlüssen.

Gleichermaßen besteht ein hoher Bedarf an einem effizienten bzw. lang anhaltenden Wärmeschutz angrenzender Bereiche bzw. Räume, insbesondere Fahrzeuginnenräume, vor der unkontrollierten Wärmeentwicklung in der Batterie. Insbesondere sollten Insassen und/oder Gegenstände so lange vor Wärme geschützt werden, bis Rettungs- bzw. Bergungsmaßnahmen vollständig abgeschlossen sind.

Die DE 101 34 145 A1 betrifft ein feuerhemmendes Batteriegehäuse. Das Batteriegehäuse enthält ein thermisch aktives Material, beispielsweise Aluminiumsilikat oder Gibbsit, das sich ab einer bestimmten Temperatur umwandelt, wodurch weiter zugeführte Wärmeenergie für die fortschreitende Umwandlung verbraucht und dadurch ein Temperaturanstieg zumindest verlangsamt wird. Hier ist eine effektive Eindämmung des thermischen Durchgehens nicht oder allenfalls nur sehr schwierig erreichbar, da eine Anordnung des Schutzmaterials zwischen Batteriezellen nicht möglich ist, die Umwandlung zu einer mechanischen Belastung oder Zerstörung der Batteriezellen führen kann und die Gefahr des Zerberstens des thermisch aktiven Materials und damit eines frühzeitigen Verlustes der Wärmedämmfunktion besteht.

Die AT 518 161 A4 betrifft eine Batterie mit einer Vielzahl von Batteriezellen, wobei zumindest zwei benachbarte Batteriezellen durch ein Schutzmaterial thermisch voneinander isoliert werden. Ab einer vorgegebenen Temperatur bläht sich das Schutzmaterial auf und werden die voneinander isolierten Batteriezellen durch die sich unter Temperatureinwirkung aufblähende Volumenvergrößerung des Schutzmaterials voneinander weggeschoben, wobei die Batteriezellen auf diese Weise thermisch weiter voneinander getrennt bzw. isoliert werden sollen. Nachteilig ist, dass sich aufgrund der Volumenvergrößerung des Schutzmaterials - insbesondere zusätzlich zur Druckerhöhung infolge der Wärmeentwicklung - ein Blähdruck innerhalb der Batterie einstellt, wodurch sich das Risiko des Zerberstens der Batterie und/oder der Beschädigung und Zerstörung von Batteriezellen entsprechend erhöht.

Aus der US 8,541,126 B2 ist ein Wärmedämmelement zur thermischen Isolierung einer Batterie bekannt. Das Wärmedämmelement ist zwischen zwei benachbarten Batteriezellen angeordnet. Das Wärmedämmelement weist einen Schichtaufbau auf, wobei eine Zwischenschicht zwischen zwei Deckschichten angeordnet ist. Die Zwischenschicht weist gegenüber den Deckschichten eine höhere Wärmeleitfähigkeit auf. Die Deckschichten können als Faserschicht aus keramischen oder refraktorischen Fasern ausgebildet sein. Nachteilig ist, dass das Wärmedämmelement aufgrund der Ausbildung der Fasern spröde ist und bereits bei geringer Druckbelastung bersten bzw. fragmentieren kann. Dies ist nicht nur mit einer signifikanten Beeinträchtigung oder sogar einem Verlust der Wärmedämmfunktion verbunden, sondern führt auch zu Beschädigungen von benachbarten bzw. angrenzenden Batteriezellen und vergrößert letztlich die Explosionsgefahr.

Die EP 3 142 166 A1 betrifft ein Wärmedämmelement mit einer starren Glimmerplatte und einer kompressiblen, kurzfaserigen bzw. refraktorischen Faserschicht, die abwechselnd übereinander angeordnet bzw. gestapelt sind. Nachteilig ist, dass eine flexible Anpassung bzw. Formgebung, insbesondere zum Einbau in eine Batterie, nicht möglich ist. Auch kann das Wärmedämmelement mit seinen spröden Glimmerplatten und seiner kurzfaserigen Fasermatte infolge einer unkontrollierten Wärmeentwicklung und des damit verbundenen Druckanstiegs leicht bersten bzw. fragmentieren und dadurch zu Schäden in der Umgebung führen bzw. vorzeitig seine Wärmedämmfunktion verlieren. Schließlich ist das hohe Flächengewicht gerade für Fahrzeuge nachteilig.

Die DE 32 42 900 A1 betrifft eine thermische Isolierung mit einem doppelwandigen Gehäuse für eine Hochtemperatur-Speicherbatterie. Die Isolierung ist von einem doppelwandigen Gehäuse begrenzt, wobei zwischen den Wänden des Gehäuses ein Isoliermaterial aus einer Vielzahl von flächigen dünnen Schichten angeordnet ist.

Die US 2006/0068278 A1 betrifft eine gedämmte Batteriepackung für ein Fahrzeug. Die Batteriepackung weist eine Vielzahl von Energiemodulen auf, die in einem Trog angebracht sind, wobei der Trog an seinen Innenseiten ein Dämmelement aufweist.

Das Dämmelement kann mehrschichtig aufgebaut sein und weist anorganische Fasern auf, beispielsweise eine Schicht aus vernadeltem Faservlies.

Der vorliegenden Erfindung liegt die Aufgabe zugrunde, ein mehrschichtiges Wärmedämmelement zur thermischen Isolierung einer Batterie, eine Batterie mit einem solchen Wärmedämmelement und eine Verwendung des Wärmedämmelements anzugeben, wobei eine effiziente Wärmedämmung und/oder eine robuste bzw. widerstandsfähige Ausbildung und/oder eine flexible bzw. leichte Montage bzw. Integration in die Batterie ermöglicht oder unterstützt werden bzw. wird.

Die obige Aufgabe wird durch ein hierin beschriebenes mehrschichtiges Wärmedämmelement, durch eine Batterie gemäß Anspruch 1 oder durch eine Verwendung gemäß Anspruch 15 gelöst. Vorteilhafte Weiterbildungen sind Gegenstand der Unteransprüche.

Ein erster Aspekt der vorliegenden Erfindung liegt darin, dass eine Faserschicht des Wärmedämmelements aus langen Fasern von mehr als 30 mm Länge und/oder aus einem vernadelten bzw. verfestigten Faservlies gebildet ist. Durch die langen Fasern und/oder die Vernadelung bzw. Verfestigung der Faserschicht erhöht sich die mechanische Widerstandsfähigkeit gegenüber einer sonstigen Faserschicht signifikant. So ist die erfindungsgemäße Faserschicht einerseits dehnbar und druckelastisch, wodurch die Aufnahme hoher Druckkräfte ermöglicht wird. Gleichzeitig besitzt die Faserschicht eine hohe Wärmeisolationsfähigkeit, da die miteinander verschlungenen Fasern eine effiziente Reduktion des Durchganges von Wärmeenergie durch die Faserschicht hindurch bewirken. Dies ist insbesondere bei einer unkontrollierten Wärmeentwicklung innerhalb der Batterie, beispielsweise beim thermischen Durchgehen einer Batteriezelle, vorteilhaft, da auf diese Weise die völlige Zerstörung bzw. Explosion der Batterie signifikant hinausgezögert wird. Schließlich weisen vernadelte Faservliese ein geringes Flächengewicht auf, was die Handhabung erleichtert.

Vorzugsweise ist die Faserschicht aus vernadelten bzw. verfestigten Glasfasern oder Silikatfasern oder aus einer Mischung davon hergestellt.

Besonders bevorzugt weisen die Fasern der Faserschicht eine Länge von mindestens 40 mm, vorzugsweise mindestens 50 mm, insbesondere im Wesentlichen 50 bis 60 mm auf. Dies ermöglicht eine besonders hohe druck- und reißfeste Ausbildung der Faserschicht.

Insbesondere weisen die Fasern einen mittleren Durchmesser von mindestens 4 µm, vorzugsweise mindestens 5 µm, insbesondere von 6 bis 15 µm, auf.

Besonders bevorzugt ist die Faserschicht bindemittelfrei und/oder schmelzperlenfrei ausgebildet.

Vorzugsweise weist die Faserschicht bzw. Zwischenlage ein Flächengewicht von weniger als 1000 g/m², vorzugsweise weniger als 800 g/m², insbesondere weniger als 600 g/m², und/oder mehr als 150 g/m², vorzugsweise mehr als 200 g/m², besonders bevorzugt mehr als 300 oder 400 g/m², auf. Dies ermöglicht eine leichte Handhabung.

Gemäß einem zweiten, auch unabhängig realisierbaren Aspekt der vorliegenden Erfindung sind die Deckschichten biegeschwach bzw. biegeweich ausgebildet, um das Wärmedämmelement sowohl kompressibel als auch flexibel bzw. elastisch biegsam auszubilden. Dies ermöglicht eine flexible Anpassung an unterschiedliche Einbausituationen und/oder eine bessere Anpassung bei hohen Belastungen, beispielsweise Bersten einer Batteriezelle, so dass das Wärmedämmelement widerstandsfähiger gegen Zerstörung bzw. Verlust seiner Wärmedämmfunktion ist. Schließlich wird die Freisetzung von Fragmenten signifikant reduziert.

Vorzugsweise ist mindestens eine Deckschicht flüssigkeitsdicht, vorzugsweise wasserdicht, ausgebildet. Eine der Deckschichten, vorzugsweise beide Deckschichten, ist bzw. sind darüber hinaus wasserabweisend und/oder gasdicht ausgebildet. Auf diese Weise wird die Zwischenlage bzw. Faserschicht effizient geschützt, wodurch eine effiziente Wärmedämmung auch in feuchter und/oder gashaltiger Umgebung gewährleistet ist.

Vorzugsweise ist mindestens eine Deckschicht als hitzebeständige Metallschicht, vorzugsweise Aluminiumschicht, ausgebildet.

Alternativ kann auch mindestens eine Deckschicht als hitzebeständige Kunststoffschicht, vorzugsweise Polyimidschicht, oder als hitzebeständige Gewebeschicht, vorzugsweise Glasgewebeschicht, ausgebildet sein.

Eine als Metall-, Kunststoff- oder Gewebeschicht ausgebildete Deckschicht ist vorzugsweise weniger als 100 µm, besonders bevorzugt weniger als 80 µm, insbesondere zwischen 20 und 50 µm, dick.

Gemäß einer bevorzugten Ausführungsform weist das Wärmedämmelement eine Schicht aus einem Gewebe auf. Das Gewebe kann mindestens eine Deckschicht und/oder eine Zusatzschicht bilden. Vorzugsweise ist das Gewebe außen an dem Wärmedämmelement angeordnet. Das Gewebe kann Metallfasern, insbesondere Edelstahlfasern und/oder Aluminiumfasern, Glasfasern, Kohlefasern, Silikatfasern und/oder eine Mischung daraus aufweisen oder daraus bestehen. Insbesondere kann durch die Verwendung eines Gewebes als Deckschicht die mechanische Stabilität des Wärmedämmelements signifikant erhöht bzw. verbessert werden. Dies ist insbesondere vorteilhaft als mechanischer Schutz bei einer Explosion einer Batteriezelle.

Vorzugsweise ist mindestens eine Deckschicht bzw. das Wärmedämmelement luftdurchlässig bzw. gasdurchlässig ausgebildet, beispielsweise, wenn die Deckschicht das Gewebe aufweist oder hierdurch gebildet ist. Dies kann die Gefahr einer Explosion einer von einem oder mehreren Wärmedämmelementen ummantelten bzw. umgebenen Batterie verringern, da auf diese Weise explosive Gase durch die Deckschicht abgeleitet werden können.

Besonders bevorzugt ist mindestens eine Deckschicht oder sind beide Deckschichten als hitzebeständige Glimmerschicht, vorzugsweise Glimmerpapierschicht oder Glimmertafel, ausgebildet. Insbesondere ist eine als Glimmerschicht ausgebildete Deckschicht weniger als 3 mm, vorzugsweise weniger als 2 mm, insbesondere weniger als 1 mm, ganz besonders bevorzugt zwischen 0,05 und 0,15 mm, dick. Dies gestattet eine hohe Hitzebeständigkeit bei gleichzeitiger Flexibilität bzw. Biegsamkeit.

Besonders bevorzugt ist die erste Deckschicht als hochtemperaturbeständige Glimmerschicht, vorzugsweise Glimmerpapierschicht, ausgebildet, wohingegen die zweite Deckschicht als Aluminiumschicht, vorzugsweise Aluminiumfolie, ausgebildet ist. Alternativ kann die zweite Deckschicht auch als Kunststoffschicht, vorzugsweise Polyimidschicht, ausgebildet sein. Durch die vorgenannte Materialpaarung lässt sich die Wärmeisolierung optimieren. Dies hat sich durch Versuche bestätigt.

Besonders bevorzugt weist die Zwischenlage zwei Faserschichten, insbesondere aus vernadeltem Faservlies, auf, wobei die Faserschichten durch eine hitzebeständige und/oder biegeschwache Zwischenschicht voneinander getrennt sind. Durch den so gebildeten Multilayer-Aufbau (zwei oder mehr durch eine Zwischenschicht getrennte Wärmedämm- bzw. Faserschichten) lassen sich die Wärmedämmeigenschaften der Zwischenlage weiterführend verbessern, da die Zwischenschicht innerhalb der Zwischenlage eine thermische Barriere zwischen den Faserschichten bildet und dadurch die Wärmeausbreitung durch die Zwischenlage bzw. das Wärmedämmelement hindurch weiter reduziert bzw. eindämmt. Auch dies haben Versuche bestätigt.

Besonders bevorzugt ist die Zwischenschicht als hochtemperaturbeständige Kunststoffschicht, vorzugsweise Polyimidfolie, oder Aluminiumschicht, insbesondere Aluminiumfolie, ausgebildet.

Die Zwischenschicht ist vorzugsweise weniger als 100 µm, besonders bevorzugt weniger als 80 µm, insbesondere zwischen 20 und 50 µm, dick.

Vorzugsweise weist mindestens eine Deckschicht und/oder die Zwischenschicht eine elektrische Durchschlagsfestigkeit von mehr als 1 kV/mm, vorzugsweise mehr als 1,5 kV/mm, insbesondere mehr als 2 kV/mm, auf. Dies vermeidet bzw. verzögert die Bildung von Lichtbögen oder Funken.

Insbesondere ist das Wärmedämmelement - vorzugsweise im Einbauzustand - weniger als 7 mm, vorzugsweise weniger als 6 mm, insbesondere zwischen 2 bis 3 mm, dick. Dies gestattet einen flexiblen und einfachen Einbau in die Batterie, auch in enge Einbauspalte.

Insbesondere weist das Wärmedämmelement auf wenigstens einer Flachseite zumindest abschnittsweise eine Klebeschicht auf oder ist auf einer Flachseite zumindest abschnittsweise selbstklebend ausgebildet. Dies gestattet eine einfache Anordnung bzw. Befestigung des Wärmedämmelements an oder in der Batterie und/oder weiteren Wärmedämmelementen.

Vorzugsweise sind die Deckschichten und die Zwischenlage miteinander verklebt oder auf sonstige Weise zu einem Verbund verbunden. Auf diese Weise wird ein mechanisch stabiler Schichtverbund realisiert.

Das Wärmedämmelement weist insbesondere eine elektrische Durchschlagsfestigkeit von mehr als 20 kV/mm, vorzugsweise mehr als 30 kV/mm, insbesondere von 40 bis 70 kV/mm, auf.

Vorzugsweise weist das Wärmedämmelement ein Flächengewicht von weniger als 1500 g/m², vorzugsweise weniger als 1300 g/m², insbesondere weniger als 1000 g/m², und/oder mehr als 150 g/m², vorzugsweise mehr als 200 g/m², besonders bevorzugt mehr als 300 oder 400 g/m², auf.

Die Wärmeleitfähigkeit des Wärmedämmelements ist bei 25 °C Raumtemperatur geringer als 0,1 W/mK, vorzugsweise geringer als 0,08 W/mK, insbesondere geringer als 0,04 W/mK.

Eine vorschlagsgemäße Batterie, vorzugsweise Lithium-Ionen-Batterie, insbesondere in Form einer Traktionsbatterie für ein Elektrofahrzeug, weist ein Gehäuse und wenigstens ein vorschlagsgemäßes mehrschichtiges Wärmedämmelement auf, das zur thermischen Isolierung im und/oder am Gehäuse angeordnet ist. Hierdurch ergeben sich entsprechende Vorteile.

Vorzugsweise verschließt bzw. isoliert das Wärmedämmelement die Batterie oder Batteriezellen oder das Gehäuse außen oder innen oberseitig zumindest teilweise, vorzugsweise vollständig oder vollflächig. Dies gestattet eine effektive Wärmeisolierung der Batterie nach oben bzw. gegenüber einem oberhalb der Batterie angeordneten bzw. angrenzenden Bereich, insbesondere einem Fahrzeuginnenraum eines Fahrzeugs. Dadurch werden in dem Bereich bzw. Raum befindliche Personen bzw. Insassen oder Gegenstände effektiv bzw. ausreichend lange - also bis zum Abschluss von Bergungs- bzw. Rettungsmaßnahmen - vor der unkontrollierten Wärmeentwicklung in der Batterie geschützt.

Alternativ oder zusätzlich kann das Wärmedämmelement zwischen zwei benachbarten Batteriezellen im Gehäuse angeordnet sein und diese thermisch voneinander isolieren. Auf diese Weise wird ein Übergreifen des thermischen Durchgehens von einer Batteriezelle auf die nächste bzw. benachbarte Batteriezelle effektiv verzögert und/oder eingedämmt und somit die explosionsartige Freisetzung von Wärme und/oder Fragmenten aus der Batterie verhindert oder zumindest signifikant hinausgezögert.

Insbesondere ist das Wärmedämmelement an oder in einem Gehäusedeckel bzw. Gehäuseoberteil des Gehäuses angebracht bzw. befestigt, vorzugsweise angeklebt.

Das Wärmedämmelement kann, insbesondere vollflächig, an einer dem Gehäuseinnenraum zugewandten, im Einbauzustand vorzugsweise obenliegenden Innenseite des Gehäuses oder Gehäusedeckels angebracht sein. Auf diese Weise wird eine effektive oberseitige Wärmeisolierung ermöglicht.

Alternativ oder zusätzlich kann das Wärmedämmelement bzw. ein weiteres Wärmedämmelement quer bzw. senkrecht zur Innenseite angebracht oder ausgerichtet sein, insbesondere derart, dass ein einfaches Einschieben des Wärmedämmelements zwischen zwei benachbarte Batteriezellen möglich ist.

Alternativ oder zusätzlich kann das Wärmedämmelement bzw. ein weiteres Wärmedämmelement innenseitig an einem Boden bzw. an der Unterseite des Gehäuseinnenraums angeordnet sein. Auf diese Weise kann ein Schutz der Batterie gegen Hitze, die von der Unterseite auf die Batterie einwirkt, beispielsweise bei einem Treibstoffbrand auf der Straße, erreicht werden.

Alternativ oder zusätzlich kann das Wärmedämmelement bzw. ein weiteres Wärmedämmelement innen an einer seitlichen Wand des Gehäuses bzw. einer Seitenwand des Innenraums angeordnet sein.

Vorzugsweise sind in der Batterie wenigstens zwei Wärmedämmelemente angeordnet, wobei wenigstens ein erstes Wärmedämmelement das Gehäuse bzw. den Gehäuseinnenraum oberseitig isoliert und wenigstens ein zweites Wärmedämmelement zwischen benachbarten Batteriezellen angeordnet ist. Auf diese Weise lassen sich gleichzeitig entsprechende, prinzipiell auch unabhängig voneinander realisierbar, Vorteile, also eine oberseitige Wärmeisolierung der Batterie einerseits und eine Verzögerung bzw. Reduzierung der Wärmeausbreitung zwischen benachbarten Batteriezellen, Packs oder Modulen andererseits, realisieren.

Insbesondere ist das zweite Wärmedämmelement quer bzw. senkrecht am ersten Wärmedämmelement angebracht, vorzugsweise angeklebt, vernäht oder in sonstiger Weise fest verbunden.

Bei einer vorschlagsgemäßen Batterie ist es besonders vorteilhaft, wenn das Wärmedämmelement mindestens eine Deckschicht und/oder Zusatzschicht aus einem Gewebe, vorzugsweise Metallgewebe, insbesondere Drahtgewebe aus Edelstahl, aufweist. Wie bereits zuvor erwähnt, können hierdurch explosive Gase durch die Deckschicht abgeleitet werden, sodass die Gefahren einer Explosion der Batterie verringert wird.

Des Weiteren bietet eine Deckschicht oder Zusatzschicht aus einem Gewebe vorzugsweise eine hohe mechanische Stabilität, sodass bei einer Explosion der Batterie Fahrgäste im Innenraum des Fahrzeugs effektiv vor Fragmenten geschützt werden können.

Ebenso ist es möglich, dass mittels des Gewebes eine Filterfunktion für explosive und/oder giftige bzw. gesundheitsschädliche Gase bereitgestellt wird, sodass Fahrgäste im Innenraum des Fahrzeugs vor solchen Gasen geschützt werden. Vorzugsweise ist das Gewebe derart ausgebildet, dass wird zumindest ein Teil der Gase an dem Gewebe abgeschieden wird. Die aus solchen Gasen bzw. Abgasen resultierenden Gefahren für den Menschen werden somit verringert.

Generell ist anzumerken, dass durch die vorschlagsgemäßen Aspekte gemäß der vorliegenden Erfindung die thermische Isolierung und der Brandschutz des Fahrgastraums von Batterien, insbesondere für Elektrofahrzeuge, verbessert bzw. vereinfacht wird. Das vorschlagsgemäße Wärmedämmelement ermöglicht insbesondere eine sehr wirksame Wärmedämmung zwischen der Batterie einerseits und einem vorzugsweise oberhalb der Batterie angeordneten bzw. angrenzenden Fahrzeuginnenraum andererseits. Alternativ oder zusätzlich wird ein Übergreifen von Wärme bzw. des thermischen Durchgehens einer Batteriezelle auf benachbarte Batteriezellen hinausgezögert bzw. eingedämmt, wodurch die Zerstörung bzw. Explosion der Batterie verhindert oder zumindest signifikant hinausgezögert wird. So wird ausreichend Zeit zur Bergung bzw. Rettung zur Verfügung gestellt, innerhalb der die Insassen vor der unkontrollierten Wärmeentwicklung in der Batterie hinreichend geschützt sind.

Die oben genannten Aspekte und Merkmale der vorliegenden Erfindung sowie die sich aus den Ansprüchen und der nachfolgenden Beschreibung ergebenden Aspekte und Merkmale der vorliegenden Erfindung können grundsätzlich unabhängig voneinander, aber auch in beliebiger Kombination bzw. Reihenfolge realisiert werden. Zusätzliche Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1A: einen schematischen Schnitt eines vorschlagsgemäßen mehrschichtigen Wärmedämmelements zur thermischen Isolierung;
- Fig. 1B: einen schematischen Schnitt eines mehrschichtigen Wärmedämmelements gemäß einer weiteren Ausführungsform;
- Fig. 1C: einen schematischen Schnitt eines vorschlagsgemäßem Wärmedämmelements gemäß einer anderen weiteren Ausführungsform;
- Fig. 1D: eine schematische Darstellung eines Gewebes;
- Fig. 2: einen schematischen Schnitt einer Batterie mit darin angeordneten Wärmedämmelementen, die in einem schematisch angedeuteten Fahrzeug angeordnet bzw. verbaut ist;
- Fig. 3: einen schematischen Schnitt einer Batterie mit einem geordneten Wärmedämmelement gemäß einer weiteren Ausführungsform;
- Fig. 4: einen ersten Versuchsaufbau zur Durchführung von Temperaturmessungen an vorschlagsgemäßen Wärmedämmelementen;
- Fig. 5: einen zweiten Versuchsaufbau zur Durchführung von Temperaturmessungen an vorschlagsgemäßen Wärmedämmelementen;
- Fig. 6: ein erstes Temperaturdiagramm, gemessen an einem vorschlagsgemäßen Wärmedämmelement mit einem ersten Schichtaufbau; und
- Fig. 7: ein zweites Temperaturdiagramm, gemessen an einem vorschlagsgemäßen Wärmedämmelement mit einem zweiten Schichtaufbau.

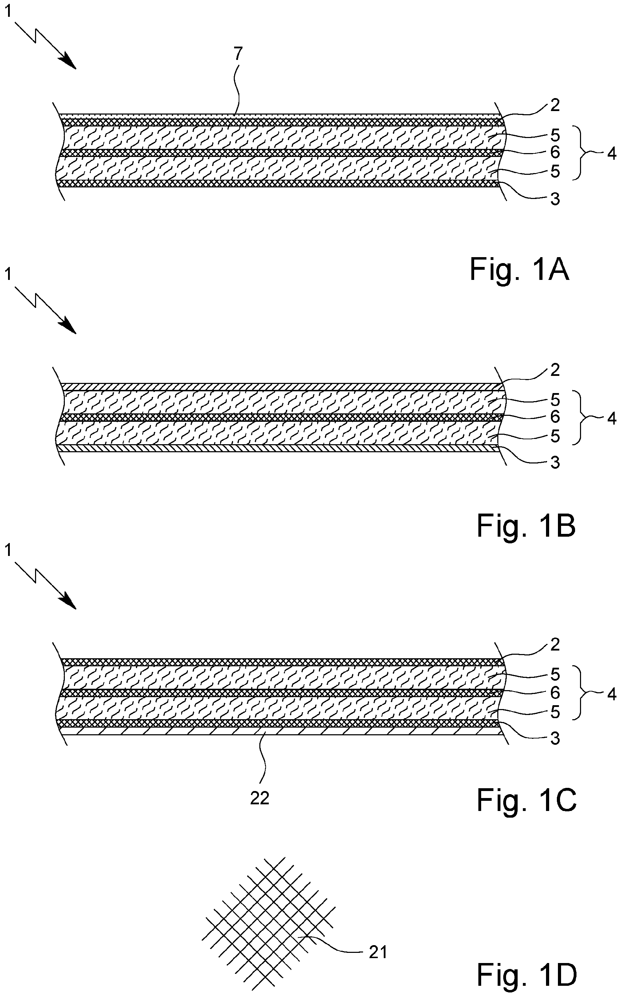

Fig. 1A zeigt in einer schematischen, nicht maßstabsgerechten Schnittdarstellung ein vorschlagsgemäßes mehrschichtiges Wärmedämmelement 1. Die Figuren 1B und 1C zeigen in einer ebenfalls schematischen, nicht maßstabsgerechten Schnittdarstellung weitere Ausführungsformen des vorschlagsgemäßen mehrschichtigen Wärmedämmelements 1. Die dargestellten Ausführungsformen sind ähnlich zueinander und können auch beliebig untereinander kombiniert werden. Insbesondere dienen die verschiedenen Figuren 1A, 1B und 1C lediglich zur Hervorhebung unterschiedlicher bevorzugter Aspekte.

Das Wärmedämmelement 1 ist insbesondere als flächiges Schichtpaket ausgebildet.

Das Wärmedämmelement 1 ist insbesondere kompressibel und gleichzeitig biegsam ausgebildet.

Unter dem Begriff "biegsam" ist vorzugsweise eine ausreichend geringe Biegesteifigkeit des Wärmedämmelements 1 zu verstehen, wobei die Biegesteifigkeit ein Maß für den Widerstand einer einwirkenden Kraft gegen eine Biegeverformung für ein Bauteil bzw. des Wärmedämmelements 1 darstellt. Die Biegesteifigkeit wird vorzugsweise gemäß ISO 5628 2493 bestimmt. Hierzu wird ein plattenförmiges Wärmedämmelement 1 mit einem bestimmten Maß, beispielsweise mit einer Dicke von 6 mm und einer Größe von 60 mm x 40 mm, in eine drehbare Einspannvorrichtung eingespannt. Das freie Ende des Wärmedämmelements 1 berührt einen Fühler einer Kraftmessdose, über den beim Drehen der Einspannvorrichtung eine entsprechende Kontaktkraft erfasst wird. Der Fühler greift insbesondere in einem Abstand von 50 mm zum Einspannpunkt am freien Ende des Wärmedämmelements 1 an. Die Biegesteifigkeit wird insbesondere durch die Kraft bestimmt, die bei einer Biegung des Wärmedämmelements von 15° am Fühler gemessen wird. Vorzugsweise weist das Wärmedämmelement 1 eine auf diese Weise bestimmte Biegesteifigkeit von weniger als 10 N, vorzugsweise weniger als 5 N, insbesondere weniger als 1 N, auf.

Unter dem Begriff "kompressibel" ist vorzugsweise eine ausreichend geringe Stauchhärte des Wärmedämmelements 1 zu verstehen, wobei die Stauchhärte einen Druck darstellt, der notwendig ist, um einen Probekörper bzw. das Wärmedämmelement 1 um 40 % seiner ursprünglichen Dicke zusammenzudrücken. Die Stauchhärte wird vorzugsweise gemäß DIN EN ISO 3386 bestimmt, wobei als Probekörper ein plattenförmiges Wärmedämmelement 1 mit einer Dicke von 5 mm und einer Größe von 300 mm x 200 mm und als Eindringkörper eine Aluminiumplatte mit einer Dicke von 20 mm und einer Größe von 190 x 80 mm verwendet werden. Vorzugsweise weist das Wärmedämmelement 1 eine auf diese Weise bestimmte Stauchhärte von weniger als 40 kPa, vorzugsweise weniger als 30 kPa, insbesondere weniger als 20 kPa, auf.

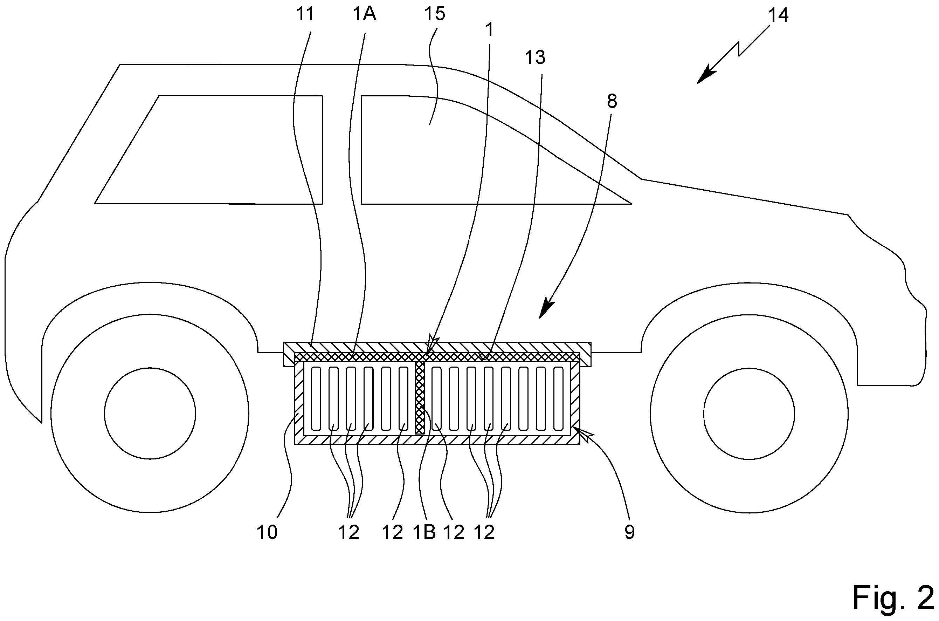

Das Wärmedämmelement 1 ist insbesondere zur thermischen Isolierung einer in Fig. 2 gezeigten Batterie 8 ausgebildet. Auf einen bevorzugten Aufbau der Batterie 8 und eine bevorzugte Anordnung von Wärmedämmelementen 1A, 1B in der Batterie 8 wird noch später eingegangen.

Das Wärmedämmelement 1 weist eine erste Deckschicht 2 und eine zweite Deckschicht 3 auf. Die Deckschichten 2, 3 bilden insbesondere jeweils eine (äußere) Flachseite des Wärmedämmelements 1.

Vorzugsweise ist zwischen den Deckschichten 2, 3 eine kompressible und/oder biegsame Zwischenlage 4 angeordnet. Die Zwischenlage 4 weist wenigstens eine Faserschicht 5 - beim Darstellungsbeispiel zwei oder mehr Faserschichten 5 - auf.

Eine oder jede Faserschicht 5 ist vorzugsweise aus einem vernadelten bzw. verfestigten Faservlies gebildet. Im Sinne der vorliegenden Erfindung ist unter dem Begriff "vernadeltes Faservlies" vorzugsweise ein textiles Flächengebilde zu verstehen, dessen Fasern durch trockene bzw. bindemittelfreie und/oder schmelzperlenfreie Vernadelung ungeordnet miteinander verschlungen und dadurch verfestigt sind.

Die Faserschichten 5 sind insbesondere aus Glasfasern oder Silikatfasern oder aus einer Mischung davon hergestellt. Beispielsweise können Glasfasern, insbesondere aus E-, ECR- oder R-Glas oder deren Mischungen, und/oder sonstige hitzebeständige Fasern eingesetzt werden.

Die Fasern weisen vorzugsweise einen mittleren Durchmesser von mindestens 4 µm, insbesondere mindestens 6 µm, ganz besonders bevorzugt im Wesentlichen von 8 bis 16 µm, auf.

Die Länge der Fasern beträgt bevorzugt mehr als 30 mm, vorzugsweise mehr als 40 mm, insbesondere im Wesentlichen 50 bis 60 mm. Grundsätzlich kann die Länge Fasern jedoch auch größer sein, beispielsweise bis zu etwa 120 mm betragen.

Vorzugsweise sind die Faserschichten 5 bindemittel- und/oder schmelzperlenfrei.

Vorzugsweise beträgt das Flächengewicht der Faserschichten 5 bzw. der Zwischenlage 4 weniger als 1000 g/m², vorzugsweise weniger als 800 g/m², insbesondere weniger als 600 g/m², und/oder mehr als 150 g/m², bevorzugt mehr als 200 g/m², insbesondere mehr als 300 oder 400 g/m².

Vorzugsweise beträgt das Flächengewicht des Wärmedämmelements 1 weniger als 1500 g/m², vorzugsweise weniger als 1300 g/m², insbesondere weniger als 1000 g/m², und/oder mehr als 150 g/m², bevorzugt mehr als 200 g/m², insbesondere mehr als 300 oder 400 g/m².

Vorzugsweise sind die Faserschichten 5 der Zwischenlage 4 durch eine Zwischenschicht 6 voneinander getrennt. Die Zwischenschicht 6 ist insbesondere durch eine hitzebeständige Metallschicht, vorzugsweise Aluminiumschicht, gebildet. Jedoch kann die Zwischenschicht 6 auch durch eine hitzebeständige Kunststoffschicht, vorzugsweise Polyimidschicht, gebildet sein.

Das Wärmedämmelement 1 kann auch mehrere Zwischenschichten 6 und dementsprechend mehrere Faserschichten 5 aufweisen, insbesondere wobei jeweils zwei Faserschichten 5 durch eine Zwischenschicht 6 voneinander getrennt sind.

Die Deckschichten 2, 3 sind vorzugsweise biegeschwach, also leicht biegbar bzw. flexibel, ausgebildet. Eine "biegeschwache" Deckschicht 2, 3 im Sinne der vorliegenden Erfindung ist vorzugsweise papier-, gewebe- oder folienartig und/oder weist eine Dicke von weniger als 2 mm, insbesondere weniger als 1 mm, auf. Besonders bevorzugt beträgt die Dicke der Deckschicht 2, 3 mehr als 0,05 mm und/oder weniger als 0,15 mm. Dadurch wird das gesamte Wärmedämmelement 1 kompressibel und flexibel ausgebildet, wobei die Kompressibilität zumindest im Wesentlichen auf die kompressible Ausbildung der Zwischenlage 4 zurückzuführen ist.

Die Deckschichten 2 und 3, Zwischenlage 4, Faserschichten 5 und/oder das Wärmedämmelement 1 sind bzw. ist vorzugsweise hitzebeständig, insbesondere bis mindestens 200 °C, besonders bevorzugt über 250 °C, 500 °C oder 1000 °C, ausgebildet.

Vorzugsweise ist mindestens eine der Deckschichten 2, 3 als hitzebeständige Metallschicht, vorzugsweise Aluminiumfolie, oder als hitzebeständige Kunststoffschicht, vorzugsweise Polyimidfolie, oder als hitzebeständige Gewebeschicht, vorzugsweise Glasgewebefolie, oder als Glimmerschicht, vorzugsweise Glimmerpapierschicht, ausgebildet.

Besonders bevorzugt ist eine bzw. die erste Deckschicht 2 als hitzebeständige Glimmerschicht, vorzugsweise Glimmerpapierschicht, und die andere bzw. die zweite Deckschicht 3 als Metallschicht, vorzugsweise Aluminiumfolie, oder Kunststoffschicht, vorzugsweise Polyimidfolie, ausgebildet. Es können jedoch auch beide Deckschichten 2, 3 identisch, insbesondere als Glimmerschicht, vorzugsweise Glimmerpapierschicht, ausgebildet sein. Dies ermöglicht eine besonders große Hitzebeständigkeit.

Eine Ausführungsform des Wärmedämmelements 1, bei dem die Deckschichten 2, 3 identisch ausgebildet sind, beispielsweise jeweils als Glimmerschicht, ist insbesondere in Fig. 1B dargestellt.

Gemäß einer weiteren Ausführungsform kann das Wärmedämmelement 1 ein Gewebe 21 aufweisen. Das Gewebe 21 bildet vorzugsweise eine zumindest im Wesentlichen planare und/oder flächige Schicht bzw. Gewebeschicht.

Der Begriff "Gewebe" bezeichnet insbesondere ein vorzugsweise flächiges Erzeugnis, dass durch eine Vielzahl von sich insbesondere zumindest im Wesentlichen rechtwinklig kreuzenden Fäden oder Drähten gebildet ist. Dabei sind die Fäden bzw. Drähte, insbesondere in einem bestimmten Rhythmus bzw. einer sich wiederholenden Abfolge, über und unter quer verlaufende Fäden bzw. Drähte geführt.

Vorzugsweise bildet das Gewebe 21 eine oder beide Deckschichten 2, 3. Es ist jedoch auch möglich, dass das Gewebe 21 eine Zusatzschicht 22 bildet, die vorzugsweise zusätzlich zu den Deckschichten 2, 3, vorgesehen ist. Die Zusatzschicht ist in Fig. 1C dargestellt.

Das Gewebe 21 ist vorzugsweise ein Metallgewebe, insbesondere ein Drahtgewebe aus Edelstahl und/oder Aluminium. Das Gewebe 21 kann jedoch auch ein Glasfasergewebe, ein Kohlefasergewebe oder ein Silikatgewebe sein. Es ist auch möglich, dass das Gewebe 21 ein Mischgewebe ist bzw. eine Mischung aus Metallfasern, insbesondere Edelstahlfasern und/oder Aluminiumfasern, Glasfasern, Kohlefasern und/oder Silikatfasern aufweist oder daraus besteht.

Die Zusatzschicht 22 ist vorzugsweise außen an dem Wärmedämmelement 1 angeordnet. Alternativ kann die Zusatzschicht 22 im Inneren des Wärmedämmelements 1 vorgesehen sein, beispielsweise zwischen der Deckschicht 2, 3 und der Faserschicht 5 und/oder zwischen der Faserschicht 5 und der Zwischenschicht 6.

Die Deckschicht 2, 3 aus einem Gewebe 21 ist vorzugsweise auf die Faserschicht 5 aufkaschiert bzw. aufgeklebt oder auf sonstige Weise fest mit der Faserschicht 5 verbunden. Besonders bevorzugt wird zur Verbindung des eine Deckschicht 2. 3 bildenden Gewebes 21 mit der Faserschicht 5 ein luftdurchlässiger bzw. gasdurchlässiger Klebstoff verwendet, vorzugsweise wobei der Klebstoff ein Austreten bzw. Durchtreten von Gasen ermöglicht, aber eine Barriere für Funken oder Flammen bildet. Dies ist besonders vorteilhaft bei der Verwendung des Wärmedämmelements 1 in einer Batterie 8, was nachfolgend genauer beschrieben wird.

Des Weiteren sind Ausführungsformen möglich, bei denen das Wärmedämmelement 1 sowohl die Zusatzschicht 22 als auch die Klebeschicht 7 aufweist, vorzugsweise wobei in diesem Fall die Klebeschicht 7 an der ersten Deckschicht 2 angeordnet ist und die Zusatzschicht 22 an der zweiten Deckschicht 3 angeordnet ist oder umgekehrt.

Vorzugsweise weist das Gewebe 21 eine hohe Hitzebeständigkeit auf, vorzugsweise bis zu einer Temperatur von etwa 1150 °C.

Das Gewebe 21, insbesondere Metallgewebe, weist vorzugsweise eine Maschenweite von mindestens 0,1 mm und/oder höchstens 0,4 mm auf. Besonders bevorzugte Maschenweiten sind beispielsweise etwa 0,114 mm, etwa 0,22 mm und etwa 0,315 mm.

Das Gewebe 21, insbesondere Metallgewebe, weist vorzugsweise eine offene Siebfläche von mindestens 30 % und/oder höchstens 60 % auf. Besonders bevorzugte offene Siebflächen betragen beispielsweise etwa 37,0 %, etwa 42,4 % und etwa 51 %.

Vorzugsweise ist mindestens eine Deckschicht 2, 3 und/oder die Zusatzschicht 22, insbesondere das Gewebe, gasdurchlässig.

Vorzugsweise ist mindestens eine Deckschicht und/oder die Zusatzschicht 22, insbesondere das Gewebe 21, derart ausgebildet, dass explosive, giftige und/oder gesundheitsschädliche Gase beim Durchtritt durch das Wärmedämmelement 1, die Deckschicht 2,3 und/oder die Zusatzschicht 22 gefiltert bzw. absorbiert werden, beispielsweise mechanisch und/oder chemisch.

Vorzugsweise weist mindestens eine Deckschicht 2, 3 und/oder die Zusatzschicht 22, insbesondere das Metallgewebe bzw. das Wärmedämmelement 1 insgesamt eine derartige mechanische Stabilität auf, dass bei einer Explosion der Batterie 8 keine Fragmente das Wärmedämmelement 1 durchdringen können.

Das Wärmedämmelement 1 weist - insbesondere im nicht komprimierten Zustand oder Auslieferungszustand - vorzugsweise eine Dicke von weniger als 15 mm, vorzugsweise weniger als 10 mm, insbesondere zwischen 6 bis 8 mm, auf.

Besonders bevorzugt weist das Wärmedämmelement 1 bzw. mindestens eine Deckschicht 2, 3 und/oder die Zwischenschicht 6 eine elektrische Durchschlagsfestigkeit von mehr als 20 kV/mm, vorzugsweise mehr als 30 kV/mm, insbesondere von 40 bis 70 kV/mm, auf.

Die Deckschichten 2, 3 und die Zwischenlage 4 sind insbesondere durch Verkleben miteinander verbunden. Insbesondere wird hierzu ein hitzebeständiger Klebstoff eingesetzt. Jedoch sind auch andere Verbindungstechniken, beispielsweise Vernähen oder Verschweißen, möglich.

Vorzugsweise bzw. optional weist mindestens eine Deckschicht 2, 3 - beim Darstellungsbeispiel die erste Deckschicht 2 - eine Klebeschicht 7 auf, um das Wärmedämmelement 1 bedarfsweise an einen Teil der Batterie 8 und/oder an ein weiteres Wärmedämmelement 1 anzubringen bzw. dort zu befestigen.

Die Klebeschicht 7 besteht insbesondere aus einem Acrylatklebstoff.

Das Flächengewicht der Klebeschicht 7 beträgt vorzugsweise weniger als 150 g/m², vorzugsweise weniger als 120 g/m², insbesondere zwischen 50 und 100 g/m². Alternativ oder zusätzlich kann die Klebeschicht 7 auch als doppelseitiges Klebeband ausgebildet sein.

Die Klebeschicht 7 ist jedoch nicht zwingend vorgesehen, sondern lediglich optional, wie insbesondere aus den Figuren 1B und 1C ersichtlich ist.

Nachfolgend wird anhand von Fig. 2 eine vorschlagsgemäße Anordnung bzw. Verwendung von vorschlagsgemäßen Wärmedämmelementen 1A und 1B und optional weiteren vorschlagsgemäßen Wärmedämmelementen 1C und 1D in der Batterie 8 näher erläutert. Die Wärmedämmelemente 1A bis 1D können identisch oder unterschiedlich gemäß den voranstehend erläuternden Ausführungsformen ausgebildet sein.

Nachfolgend werden die Wärmedämmelemente 1A bis 1C zur Unterscheidung als erstes Wärmedämmelement 1A, zweites Wärmedämmelement 1B, drittes Wärmedämmelement 1C und viertes Wärmedämmelement 1D bezeichnet. Dies dient jedoch nur zur Unterscheidung der unterschiedlichen Wärmedämmelemente und impliziert nicht, dass beispielsweise bei Vorsehen des dritten Wärmedämmelements 1D auch zwingend ein zweites Wärmedämmelement 1B vorhanden sein muss.

Insbesondere ist die Batterie 8 zur Energieversorgung in einem schematisch dargestellten Fahrzeug 14, insbesondere Elektrofahrzeug, angeordnet bzw. verbaut. Insbesondere befindet sich die Batterie 8 im Einbauzustand unterhalb eines Fahrzeuginnenraums 15, beispielsweise eines Passagier- oder sonstigen Innenbereichs des Fahrzeugs 14.

Die Batterie 8 weist vorzugsweise ein Gehäuse 9 mit einem Gehäuseunterteil 10 und einem Gehäuseoberteil bzw. Gehäusedeckel 11 auf. Das Gehäuse 9 besteht vorzugsweise aus einem nicht-leitendem Material, beispielsweise Kunststoff, oder aus Metall.

Die Batterie 8 ist vorzugsweise als wiederaufladbarer Lithium-Ionen-Akkumulator ausgeführt. Alternativ kann diese auch aus oder mit als Lithium-Eisen-Phosphat, Lithium-Cobalt-Oxid, Lithium-Metall-Oxid, Lithiumionen-Polymer, Nickel-Zink, Nickel-Metall, Nickel-Cadmium, Nickel-Wasserstoff, Nickel-Silber, Nickel-Metall-Hybrid und ähnlichen Systemen bzw. Materialien aufgebaut oder ausgeführt werden.

Insbesondere weist die Batterie 8 wenigstens eine Gruppe von Batteriezellen 12 auf, die elektrisch miteinander zusammengeschaltet und im Gehäuse 9, vorzugsweise im Gehäuseunterteil 10, aufgenommen sind.

Ein erstes Wärmedämmelement 1A ist oberhalb der Batteriezellen 12 und/oder am Gehäusedeckel 11 des Gehäuses 9 angebracht bzw. befestigt, vorzugsweise angeklebt, insbesondere mittels der Klebeschicht 7.

Besonders bevorzugt ist das erste Wärmedämmelement 1A vollflächig an einer dem Gehäuseinnenraum zugewandten Innenseite 13 des Gehäusedeckels 11 angebracht. Das erste Wärmedämmelement 1A verschließt bzw. isoliert das Gehäuseunterteil 10 bzw. die Batterie 8 oder deren Zellen 12 also oberseitig.

Auf diese Weise wird eine besonders effiziente oberseitige Wärmedämmung und ein Brandschutz gegenüber dem Fahrzeuginnenraum 15 erzielt, um darin befindliche Personen oder Gegenstände effizient bzw. lange genug vor einer unkontrollierten Wärmeentwicklung in der Batterie 8 zu schützen. Eine gasdichte Konstruktion verhindert bzw. reduziert ebenfalls eine gasexplosionsartige Ausbreitung in Richtung des Fahrgastraumes.

Besonders bevorzugt ist die dem Gehäuseinnenraum bzw. den Batteriezellen 12 zugewandte zweite Deckschicht 3 des ersten Wärmedämmelements 1A als Glimmerschicht, vorzugsweise Glimmerpapierschicht, ausgebildet, wobei die den Batteriezellen 12 bzw. dem Gehäuseinnenraum abgewandte erste Deckschicht 2 zur Befestigung am Gehäusedeckel 11 ausgebildet und insbesondere mit der Klebeschicht 7 versehen ist. Dies verbessert die Hitzebeständigkeit und erleichtert gleichzeitig die Handhabung bzw. Befestigung des Wärmedämmelements 1 am Gehäuse 9.

Alternativ oder zusätzlich ist mindestens ein (weiteres bzw. zweites) Wärmedämmelement 1B zwischen benachbarten Batteriezellen 12, beim Darstellungsbeispiel zwischen zwei Gruppen von Batteriezellen 12, angeordnet, wodurch die Gruppen thermisch voneinander isoliert bzw. getrennt werden.

Besonders bevorzugt ist das Wärmedämmelement 1B zwischen den Batteriezellen 12 eingeschoben, eingedrückt oder in sonstiger Weise eingebracht.

Insbesondere umschließt und/oder umhüllt das Wärmedämmelement 1A bzw. 1B mindestens eine Batteriezelle 12 oder eine Gruppe von Batteriezellen 12, vorzugsweise allseitig, und/oder insbesondere derart, dass die Batteriezelle 12 bzw. Gruppe von Batteriezellen 12 über das Wärmedämmelement 1A bzw. 1B dämpfend im Gehäuse 9 gelagert bzw. angeordnet ist. Dies ermöglicht neben einer effektiven, insbesondere allseitigen, Wärmeisolierung auch eine robuste bzw. widerstandsfähige Lagerung der Batteriezellen 12, da etwaige Stöße bzw. Erschütterungen durch das kompressible Wärmedämmelement 1A bzw. 1B abgedämpft bzw. absorbiert werden.

Insbesondere ist das zweite Wärmedämmelement 1B quer bzw. senkrecht zur Innenseite 13 des Gehäusedeckels 11 angebracht bzw. vertikal ausgerichtet, insbesondere derart, dass es beim Aufsetzen des Gehäusedeckels 11 auf das Gehäuseunterteil 10 zwischen die Batteriezellen 12 einführbar ist.

Die zweiten Wärmedämmelemente 1B sind optional quer bzw. senkrecht am ersten Wärmedämmelement 1A angebracht bzw. befestigt, beispielsweise verklebt, vernäht oder in sonstiger Weise damit verbunden.

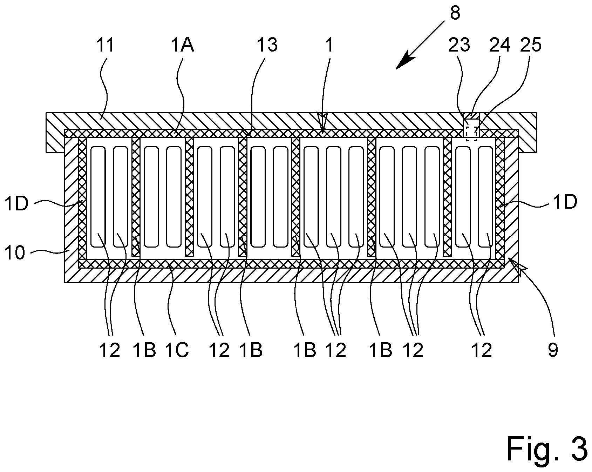

Die Batterie 8 kann eine Vielzahl von zweiten Wärmedämmelementen 1B aufweisen. Vorzugsweise sind zwischen mehreren Batteriezellen 12, insbesondere zwischen allen Batteriezellen 12, zweite Wärmedämmelemente 1B angeordnet bzw. vorgesehen. In Fig. 3 ist eine Batterie 8 mit mehreren Wärmedämmelement 1B schematisch dargestellt.

Alternativ oder zusätzlich zu dem ersten Wärmedämmelement 1A und/oder dem zweiten Wärmedämmelement 1B kann die Batterie 8 ein weiteres bzw. drittes Wärmedämmelement 1C aufweisen, wie beispielsweise in Fig. 3 dargestellt. Das dritte Wärmedämmelement 1C ist vorzugsweise dem ersten Wärmedämmelement 1A gegenüberliegend und/oder an einer Unterseite bzw. einem Boden des Gehäuseinnenraums 13 angeordnet, insbesondere auf der Innenseite 13 des Gehäuses 9 Vorzugsweise ist die Unterseite bzw. der Boden von dem dritten Wärmedämmelement 1C vollständig bzw. vollflächig abgedeckt.

Es kann auch, insbesondere zusätzlich zu dem ersten Wärmedämmelement 1A, zweiten Wärmedämmelement 1B und/oder dritten Wärmedämmelement 1C, ein weiteres bzw. viertes Wärmedämmelement 1D vorgesehen sen. Vorzugsweise ist das weitere bzw. vierte Wärmedämmelement 1D an einer oder mehreren Seitenwänden der Innenseite bzw. des Gehäuses 9 vorgesehen bzw. angeordnet. Vorzugsweise wird die Seitenwand bzw. werden die Seitenwände vollständig von dem vierten Wärmedämmelement 1D abgedeckt bzw. thermisch isoliert.

Vorzugsweise ist in der Batterie 8 bzw. dem Gehäuse 9 die Gewebeschicht bzw. das Gewebe 21 - sofern vorhanden - auf der dem Innenraum 13 zugewandten Seite des Wärmedämmelements 1A, 1C, 1D angeordnet.

Vorzugsweise sind die Wärmedämmelemente 1A, 1C, 1D an der Innenseite 13 bzw. im Innenraum des Gehäuses 9 angeordnet.

Die Wärmedämmelemente 1A-1D sind vorzugsweise jeweils zwischen einer Batteriezelle 12 bzw. den Batteriezellen 12 und dem Gehäuse 9 angeordnet.

Die Batteriezellen 12 sind vorzugsweise zumindest im Wesentlichen vollständig und/oder allseitig von einem oder mehreren Wärmedämmelementen 1A-1D umhüllt bzw. umgeben.

Die Batterie 8 bzw. das Gehäuse 9 kann einen Auslass 23 für das Entweichen von Gasen aufweisen. Dies ist beispielhaft in Fig. 3 dargestellt.

Der Auslass 23 ist vorzugsweise in dem Gehäusedeckel 11 bzw. an einer Oberseite der Batterie 8 bzw. des Gehäuses 9 angeordnet. Vorzugsweise ist der Auslass 23 durch eine den Gehäusedeckel 11 und/oder das Wärmedämmelement 1A durchdringende Öffnung gebildet. Durch den Auslass 23 können Gase aus dem Gehäuse 9 entweichen, sodass eine Explosionsgefahr verringert wird.

Der Auslass 23 kann einen Filter 24 für Gase und/oder ein Ventil 25, insbesondere Einwegventil, aufweisen. Durch das Ventil kann sichergestellt werden, dass Gase aus der Batterie 8 entweichen, aber keine Gase in die Batterie 8 eindringen können.

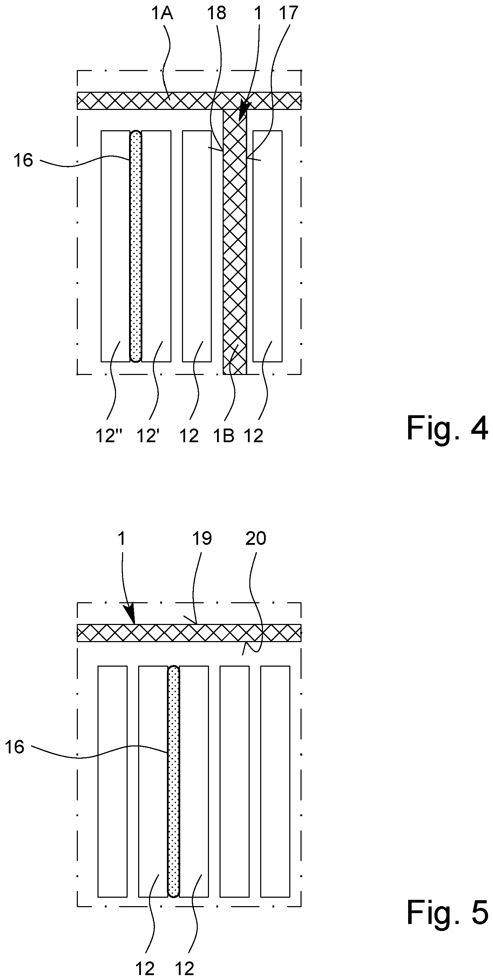

In den Fig. 4 und 5 sind schematisch Versuchsaufbauten bzw. Versuchsanordnungen zur Durchführung von Temperaturmessungen an vorschlagsgemäßen Wärmedämmelementen 1 dargestellt.

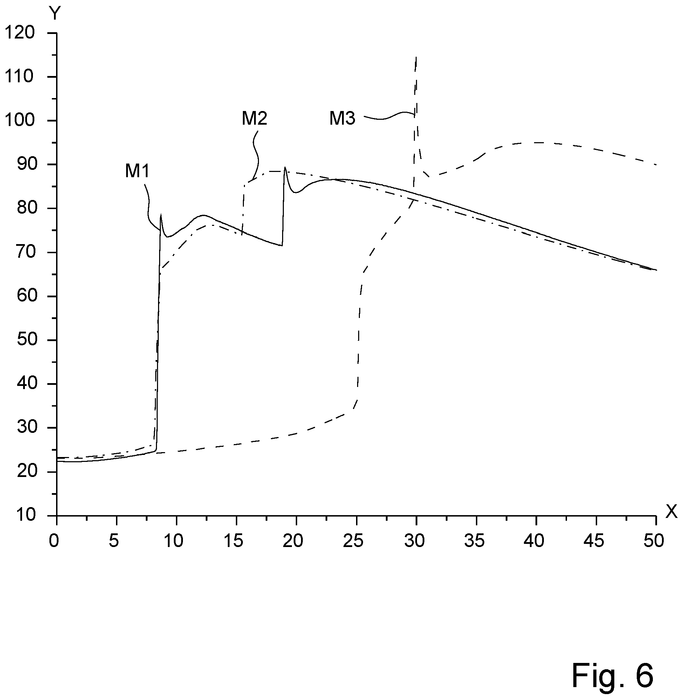

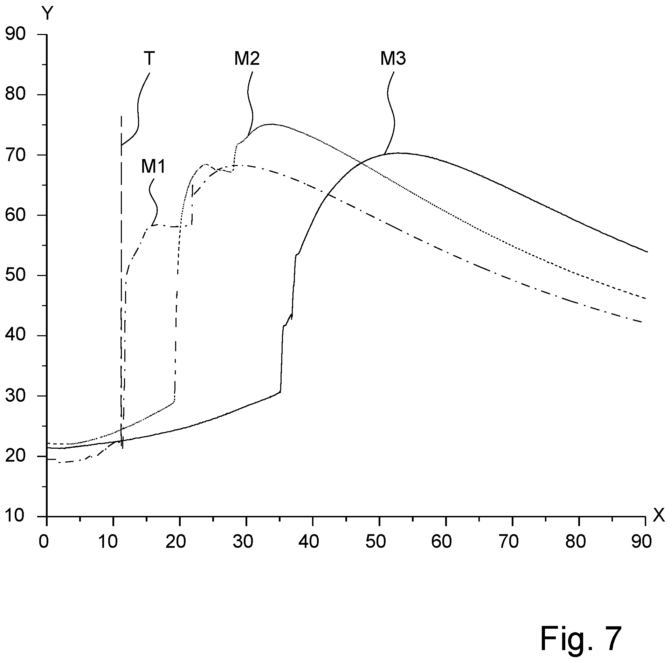

Bei den durchgeführten Versuchen wurde die Wärmedämmfunktion bzw. -fähigkeit der vorschlaggemäßen Wärmedämmelemente 1 untersucht. Hierzu wurde gezielt Wärme über ein Heizelement 16, vorzugsweise eine Heizfolie, in das Gehäuse 9 bzw. einen damit vergleichbaren Aufbau eingebracht, um vergleichbare Temperaturbedingungen wie im Fall einer unkontrollierten Wärmeentwicklung bzw. eines thermischen Durchgehens zu simulieren. Die sich ergebenden Temperaturdiagramme bzw. Temperaturverläufe sind in Fig. 6 für ein Wärmedämmelement 1 mit einem ersten Schichtaufbau und in Fig. 7 für ein Wärmedämmelement 1 mit einem zweiten Schichtaufbau gezeigt.

Bei dem in Fig. 4 dargestellten Versuchsaufbau wurde zur Simulation einer unkontrollierten Wärmeentwicklung bzw. eines thermischen Durchgehens das Heizelement 16 zwischen einer - ausgehend vom Wärmedämmelement 1 an einer zweiten Stelle befindlichen - Batteriezelle 12' und einer - ausgehend vom Wärmedämmelement 1 an einer dritter Stelle befindlichen - Batteriezelle 12" eingebracht und fortlaufend auf eine Temperatur oberhalb von 120 °C, vorzugsweise oberhalb von 200 °C, erhitzt.

Gleichzeitig wurde über ein Messmittel, insbesondere ein Thermoelement, der sich ergebende Temperaturverlauf bzw. Temperaturanstieg am Wärmedämmelement 1 auf einer dem Heizelement 16 abgewandten Kaltseite 17 einerseits und einer dem Heizelement 16 zugewandten Heißseite 18 andererseits gemessen, wobei für jeden Schichtaufbau zwei Messungen durchgeführt wurden.

Die Kurven M1 und M2 in Fig. 6 zeigen für jede Messung den sich ergebenen Temperaturverlauf an der Kaltseite 17 des Wärmedämmelements 1 mit dem ersten Schichtaufbau und die Kurven M1 und M2 in Fig. 7 entsprechende Temperaturverläufe für ein Wärmedämmelement 1 mit einem anderen bzw. zweiten Schichtaufbau.

Generell soll mithilfe des in Fig. 4 dargestellten Versuchsaufbaus die Wärmedämmfunktion in Bezug auf die Eindämmung bzw. Verzögerung des Übergreifens thermischer Energie auf benachbarte Batteriezellen 12 innerhalb des Gehäuses 9 untersucht bzw. belegt werden.

Der zweite Versuchsaufbau gemäß Fig. 5 unterscheidet sich von dem ersten Versuchsaufbau dadurch, dass der Temperaturverlauf an einem oberseitig zu den Batteriezellen 12 verlaufenen Wärmedämmelement 1 ermittelt wird. Dadurch soll die Wärmedämmfunktion bzw. Wärmeisolierung gegenüber einem an die Batterie 8 angrenzenden Raum, insbesondere dem Fahrzeuginnenraum 15, untersucht bzw. belegt werden.

Hierzu wird analog zum ersten Versuchsaufbau das Heizelement 16, insbesondere die Heizfolie, zwischen benachbarte Batteriezellen 12 angeordnet und zur Simulation einer unkontrollierten Wärmeentwicklung bzw. eines thermischen Durchgehens auf wenigstens 120 °C, vorzugsweise wenigstens 200 °C, erhitzt. Der Temperaturverlauf bzw. der Temperaturanstieg wurde mittels eines Messmittels, insbesondere Thermoelements, auf der dem Heizelement 16 abgewandten Kaltseite 19 des Wärmedämmelements 1 einerseits und auf einer dem Heizelement 16 zugewandten Heißseite 20 des Wärmedämmelements 1 andererseits aufgezeichnet.

Die Kurve M3 in Fig. 6 zeigt den sich ergebenen Temperaturverlauf an der Kaltseite 19 des Wärmedämmelements 1 mit dem ersten Schichtaufbau und die Kurve M3 in Fig. 7 den sich ergebenden Temperaturverlauf für den zweiten Schichtaufbau.

Bei dem in Fig. 6 dargestellten Temperaturdiagramm wurde ein Wärmedämmelement 1 mit folgendem, ersten Schichtaufbau eingesetzt:

| **Name/Bezeichnung** | **Bevorzugte Ausbildung** | **Bevorzugte Dicke** |
|---|---|---|
| Erste Deckschicht 2 | Aluminiumfolie | 50 µm |
| Faserschicht 5 | Verfestigtes Glasfasernadelvlies | 3 mm |
| Zweite Deckschicht 3 | Glimmerpapierschicht | 0,5 mm |
| Gesamtaufbau | | ca. 5mm (<2mm im Verbau) |

Die X-Achse repräsentiert den zeitlichen Verlauf in Minuten. Die Achse startet mit "0", die den Startpunkt des Einschaltens der Heizfolie 16 markiert.

Die Y-Achse repräsentiert die Temperatur in °C. Die Kurven beginnen bei knapp über 20°C, also im Wesentlichen bei Umgebungstemperatur.

Wie bereits erwähnt, sollte an der Kaltseite 17 bzw. 19 so lange wie möglich eine Temperatur unter 120°C, insbesondere unter 80°C, vorliegen, um eine Beschädigung bzw. einen Kurzschluss zu vermeiden und/oder eine völlige Zerstörung bzw. Explosion der Batterie 8 zu verhindern, insbesondere um den Fahrzeuginnenraum 15 ausreichend lange vor der Freisetzung von Wärme, Gasen und/oder Fragmenten zu schützen.

Die höchste Temperatur für alle Messungen wurde bei der Kurve M3 (also an der Kaltseite 19, Fig. 5) mit 115,4°C gemessen, und zwar nach ca. 30 min. Die Maximaltemperatur auf der gegenüberliegenden Heißseite 20 betrug dabei 837 °C.

Bei der Kurve M1 (erste Messung auf Kaltseite 17, Fig. 4) wurde eine Maximaltemperatur von 92,75 °C nach ca. 20 min erreicht. Die Maximaltemperatur auf der gegenüberliegenden Heißseite 18 betrug dabei 730 °C.

Bei der Kurve M2 (zweite Messung auf Kaltseite 17, Fig. 4) wurde die Maximaltemperatur von 89 °C nach ebenfalls ca. 20 min erreicht. Die Maximaltemperatur auf der gegenüberliegenden Heißseite 18 betrug dabei 728 °C.

Die Kurven M1 und M2 weichen - wie erwartet - lediglich geringfügig voneinander ab, da sie zwei Messungen derselben Messreihe sind (Versuchsaufbau Fig. 4).

Ein Vergleich der Kurve M3 (Versuchsaufbau Fig. 5) einerseits mit den Kurven M1 und M2 (Versuchsaufbau Fig. 4) andererseits zeigt zunächst, dass an der Kaltseite 19 die höchste Temperatur (115,4 °C) gemessen worden ist. Allerdings wird diese Temperatur erst nach über 30 min - und damit deutlich später als bei den anderen Kurven M1 und M2 - erreicht. Bis ca. 25 min nach Einleitung der Wärme verläuft Kurve M3 deutlich unterhalb der beiden anderen Kurven M1 und M2 und steigt erst dann an. Insofern wird insbesondere in den ersten 20 bis 25 min eine effiziente Wärmedämmung an der Kaltseite 19 und damit ein hoher Wärmeschutz gegenüber einem oberseitig angrenzenden Raum bzw. Fahrzeuginnenraum 15 ermöglicht.

Darüber hinaus zeigen die Ergebnisse, dass ein Übergreifen von Wärme bzw. des thermischen Durchgehens auf benachbarte Batteriezellen 12 effizient verzögert bzw. eingedämmt wird, da die maximale Grenztemperatur von 120 °C in allen Kurven M1 bis M3 nicht erreicht wird. Hierdurch wird das Risiko von Schädigungen bzw. Kurzschlüssen ausgeschlossen oder zumindest minimiert.

Ferner lässt sich der erste Schichtaufbau vergleichsweise kostengünstig realisieren.

Im Rahmen des in Fig. 7 dargestellten zweiten Temperaturdiagramms wurde ein vorschlagsgemäßes Wärmedämmelement 1 mit folgendem, zweiten Schichtaufbau eingesetzt:

| **Name/Bezeichnung** | **Bevorzugte Ausbildung** | **Bevorzugte Dicke** |
|---|---|---|
| Erste Deckschicht 2 | Aluminiumfolie | 50 µm |
| Faserschicht 5 | Verfestigtes Glasvlies | 5 mm |
| Zwischenschicht 6 | Polyimidfolie | 25 µm |
| Faserschicht 5 | Verfestigtes Glasvlies | 5 mm |
| Zweite Deckschicht 3 | Glimmerpapierschicht | 0,2 mm |
| Gesamtaufbau | | ca. 10mm (<3mm im Verbau) |

Die X-Achse repräsentiert den zeitlichen Verlauf in Minuten. Die Achse startet mit "0", die den Startpunkt des Einschaltens der Heizfolien 14 bzw. 15 zur Einleitung der Wärmeentwicklung in den entsprechenden Gruppen von Batteriezellen 12A-E (siehe Fig. 5) einleitet.

Die Y-Achse repräsentiert die Temperatur in °C. Die Kurven beginnen bei knapp über 20°C, also im Wesentlichen bei Umgebungstemperatur.

Die höchste Temperatur für alle Messungen wurde mit 76, 5 °C an der Kurve M1 (also an der Kaltseite 17 im Rahmen der ersten Messung, Fig. 4) ermittelt, und zwar nach 10 min. Die Maximaltemperatur auf der gegenüberliegenden Heißseite 18 betrug dabei 1300 °C.

Für Kurve M2 wurde - im Rahmen der zweiten Messung nach Fig. 4 - auf der Kaltseite 17 eine Maximaltemperatur von 75°C nach 35 Minuten erreicht. Die Maximaltemperatur auf der gegenüberliegenden Heißseite 20 betrug dabei 1000 °C.

Für Kurve M3 wurde auf der Kaltseite 19 eine Maximaltemperatur von 70°C nach 55 Minuten erreicht. Die Maximaltemperatur auf der gegenüberliegenden Heißseite 20 betrug dabei 730 °C.

Folglich wurde in allen Fällen die bevorzugte maximale Grenztemperatur von 80°C nicht erreicht, so dass bereits eine beschleunigte Alterung der benachbarten Batteriezelle vermieden oder zumindest reduziert wird.

Ein Vergleich der Kurve M3 (Versuchsaufbau Fig. 5) einerseits mit den Kurven M1 und M2 (Versuchsaufbau Fig. 4) andererseits zeigt, dass an der Kaltseite 19 (Kurve M3) nicht nur die geringste Maximaltemperatur (70 °C) vorliegt, sondern diese Maximaltemperatur auch erst deutlich später, und zwar nach ca. 55 min, vorliegt. Gleichwohl wurde an der entsprechenden Heißseite 20 auch die geringste Temperatur (730 °C) ermittelt.

Des Weiteren ist aus Fig. 7 ersichtlich, dass bei dem zweiten Schichtaufbau erst nach einer Zeit T von etwa 11 bis 12 Minuten ein signifikanter Temperaturanstieg in einer der Kurven M1 bis M3 zu verzeichnen ist.

Ebenfalls wird der in Fig. 6 erläuterte Verlauf bestätigt, dass an der Kaltseite 19 insbesondere in den ersten Minuten der Wärmeeinleitung - in Fig. 7 bis nach ca. 45 min - gegenüber der Kaltseite 17 (Kurven M1 und M2) eine deutlich geringere Temperatur vorliegt. Insofern ermöglicht das Wärmedämmelement 1 mit dem zweiten Schichtaufbau eine besonders effektive Wärmedämmung gegenüber angrenzenden Räumen bzw. Bereichen, insbesondere dem Fahrzeuginnenraum 15.

Ein Vergleich der Kurven M1 bis M3 von Fig. 7 (zweiter Schichtaufbau) mit den entsprechenden Kurven von Fig. 6 (erster Schichtaufbau) zeigt weiterhin, dass sich durch den zweiten Schichtaufbau eine weiterführend verbesserte Wärmedämmfunktion erzielen lässt. Insbesondere wurde eine Reduzierung der Maximaltemperaturen erzielt, wobei der Unterschied in den Kurven M3 (erster Schichtaufbau: 115,4 °C im Vergleich zum zweiten Schichtaufbau: 70,0 °C) besonders signifikant ist. Dies belegt den besonders vorteilhaften Einsatz des zweiten Schichtaufbaus als oberseitige Wärmeisolierung.

Generell gestattet der zweite Schichtaufbau aufgrund des Multilayer-Aufbaus der Zwischenlage 4, insbesondere mit der darin angeordneten Polyimidschicht als Zwischenschicht 6, eine optimale Reduzierung des Wärmedurchgangs und somit eine besonders effiziente Wärmedämmfunktion.

Die durch das Faservlies geschützte Polyimidschicht hat auch nach dem thermischen Explodieren noch Ihre Struktur erhalten, sodass die elektrische Isolation aufrecht erhalten bleibt.

Insgesamt zeigen die Versuche, dass sich das vorschlagsgemäße Wärmedämmelement 1 sowohl zur Eindämmung von Wärme innerhalb der Batterie 8 als auch zur oberseitigen Anordnung bzw. Isolierung, also insbesondere zum Wärmeschutz angrenzender Fahrzeuginnenräume 15, eignet. Die Effizienz ist dabei beim zweiten Schichtverbund optimal, wobei der erste Schichtverbund bei ebenfalls effektiver Wärmedämmfunktion eine vergleichsweise kostengünstige Realisierung zulässt.

Die vorliegende Erfindung betrifft ferner die Verwendung des vorschlagsgemäßen Wärmedämmelements 1 an und/oder in einer Batterie 8, vorzugsweise Lithium-Ionen Batterie, insbesondere Traktionsbatterie für ein Elektrofahrzeug.

Insbesondere wird ein Wärmedämmelement 1 oberseitig auf dem Gehäuse 9 angeordnet, um eine oberseitige Wärmeisolierung zu ermöglichen.

Alternativ oder zusätzlich wird ein Wärmedämmelement 1 zur thermischen Isolierung zwischen zwei benachbarten Batteriezellen 12 angeordnet.

Insbesondere wird das Wärmedämmelement 1 an einem Gehäusedeckel 11 bzw. Gehäuseoberteil des Gehäuses 9 angebracht bzw. befestigt, vorzugsweise angeklebt.

Besonders bevorzugt wird das Wärmedämmelement 1, insbesondere vollflächig, an einer dem Gehäuseinnenraum zugewandten Innenseite 13 des Gehäusedeckels 11 angebracht.

Vorzugsweise wird das Wärmedämmelement 1 quer bzw. senkrecht zur Innenseite 13 angebracht oder ausgerichtet.

Insbesondere werden wenigstens ein erstes Wärmedämmelement 1A und wenigstens ein zweites Wärmedämmelement 1B verwendet, wobei das erste Wärmedämmelement 1A den Gehäuseinnenraum oberseitig verschließt bzw. thermisch isoliert und das zweite Wärmedämmelement 1B zwischen benachbarten Batteriezellen 12A-E angeordnet ist.

Vorzugsweise wird das zweite Wärmedämmelement 1B, insbesondere quer bzw. senkrecht, am ersten Wärmedämmelement 1A angebracht, vorzugsweise angeklebt, vernadelt oder verschweißt.

Aspekte der vorliegenden Erfindung, die insbesondere auch in Kombination mit den voranstehend erläuterten Aspekten und Merkmalen kombinierbar sind, sind insbesondere:
1. Mehrschichtiges Wärmedämmelement 1 zur thermischen Isolierung einer Batterie 8,
   mit einer ersten Deckschicht 2,
   mit einer zweiten Deckschicht 3, und
   mit einer zwischen den Deckschichten 2, 3 angeordneten kompressiblen und/oder biegsamen Zwischenlage 4, die wenigstens eine hitzebeständige Faserschicht 5 aufweist,
   **dadurch gekennzeichnet,**
   dass die Faserschicht 5 aus einem vernadelten Faservlies gebildet ist, und/oder
   dass die Deckschichten 2, 3 biegeschwach sind und das Wärmedämmelement 1 insgesamt kompressibel und flexibel biegsam ist.
2. Wärmedämmelement nach Aspekt 1, dadurch gekennzeichnet, dass die Faserschicht 5 aus Glasfasern oder Silikatfasern oder aus einer Mischung davon hergestellt ist.
3. Wärmedämmelement nach Aspekt 1 oder 2, dadurch gekennzeichnet, dass die Fasern der Faserschicht 5 eine Länge von mehr als 30 mm, vorzugsweise mehr als 40 mm, insbesondere im Wesentlichen 50 bis 60 mm, aufweisen.
4. Wärmedämmelement nach einem der voranstehenden Aspekte, dadurch gekennzeichnet, dass die Fasern einen mittleren Durchmesser von mindestens 4 µm, vorzugsweise mindestens 5 µm, insbesondere von 6 bis 15 µm, aufweisen.
5. Wärmedämmelement nach einem der voranstehenden Aspekte, dadurch gekennzeichnet, dass die Faserschicht 5 bindemittelfrei und/oder schmelzperlenfrei ist.
6. Wärmedämmelement nach einem der voranstehenden Aspekte, dadurch gekennzeichnet, dass die Zwischenlage 4 einen Multilayer-Aufbau mit mindestens zwei Faserschichten 5 aufweist, die durch eine hitzebeständige, elektrisch durchschlagfeste und/oder biegeschwache Zwischenschicht 6 voneinander getrennt sind.
7. Wärmedämmelement nach Aspekt 6, dadurch gekennzeichnet, dass die Zwischenschicht 6 als hitzebeständige und/oder hitzereflektierende Metallschicht, vorzugsweise Aluminiumschicht, insbesondere Aluminiumfolie, ausgebildet ist.
8. Wärmedämmelement nach Aspekt 6, dadurch gekennzeichnet, dass die Zwischenschicht 6 als hitzebeständige und/oder elektrisch durchschlagfeste Kunststoffschicht, vorzugsweise Polyimidschicht, insbesondere Polyimidfolie, ausgebildet ist.
9. Wärmedämmelement nach einem der voranstehenden Aspekte, dadurch gekennzeichnet, dass mindestens eine Deckschicht 2, 3 wasserdampfundurchlässig, vorzugsweise gasdicht, und/oder wasserabweisend und/oder wasserdicht ausgebildet ist.
10. Wärmedämmelement nach einem der voranstehenden Aspekte, dadurch gekennzeichnet, dass die Deckschichten 2, 3 weniger als 1 mm, vorzugsweise weniger als 0,5 mm, insbesondere weniger als 0,1 mm, dick sind.
11. Wärmedämmelement nach einem der voranstehenden Aspekte, dadurch gekennzeichnet, dass mindestens eine Deckschicht 2, 3 als hitzebeständige Metallschicht, vorzugsweise Aluminiumfolie, ausgebildet ist.
12. Wärmedämmelement nach einem der voranstehenden Aspekte, dadurch gekennzeichnet, dass mindestens eine Deckschicht 2, 3 als hitzebeständige Kunststoffschicht, vorzugsweise Polyimidfolie, ausgebildet ist.
13. Wärmedämmelement nach einem der voranstehenden Aspekte, dadurch gekennzeichnet, dass mindestens eine Deckschicht 2, 3 als hitzebeständige Gewebeschicht, vorzugsweise Glasgewebefolie, ausgebildet ist.
14. Wärmedämmelement nach einem der voranstehenden Aspekte, dadurch gekennzeichnet, dass mindestens eine Deckschicht 2, 3, insbesondere beide Deckschichten 2, 3, als hitzebeständige Glimmerschicht, vorzugsweise Glimmerpapierschicht oder Glimmertafel, ausgebildet ist.
15. Wärmedämmelement nach einem der voranstehenden Aspekte, dadurch gekennzeichnet, dass mindestens eine Deckschicht 2, 3 oder Zusatzschicht 21 durch ein Gewebe 21 gebildet ist.
16. Wärmedämmelement nach Aspekt 15, dadurch gekennzeichnet, dass das Gewebe 21 ein Metallgewebe, insbesondere Drahtgewebe aus Edelstahl und/oder Aluminium, ist und/oder Metallfasern, insbesondere Edelstahlfasern und/oder Aluminiumfasern, aufweist.
17. Wärmedämmelement nach Aspekt 15 oder 16, dadurch gekennzeichnet, dass das Gewebe 21 ein Glasfasergewebe ist und/oder Glasfasern aufweist.
18. Wärmedämmelement nach einem der Aspekte 15 bis 17, dadurch gekennzeichnet, dass das Gewebe 21 ein Kohlefasergewebe ist und/oder Kohlefasern aufweist.
19. Wärmedämmelement nach einem der Aspekte 15 bis 18, dadurch gekennzeichnet, dass das Gewebe 21 ein Silikatgewebe ist und/oder Silikatfasern aufweist.
20. Wärmedämmelement nach einem der voranstehenden Aspekte, dadurch gekennzeichnet, dass die erste Deckschicht 2 als Glimmerschicht, vorzugsweise Glimmerpapierschicht, und die zweite Deckschicht 3 als Aluminiumschicht, vorzugsweise Aluminiumfolie, ausgebildet ist.
21. Wärmedämmelement nach einem der Aspekte 1 bis 19, dadurch gekennzeichnet, dass die erste Deckschicht 2 als Glimmerschicht, vorzugsweise Glimmerpapierschicht oder Glimmertafel, und die zweite Deckschicht 3 als Polyimidschicht, vorzugsweise Polyimidfolie, ausgebildet ist.
22. Wärmedämmelement nach einem der Aspekte 1 bis 19, dadurch gekennzeichnet, dass die erste Deckschicht 2 als Gewebe 21, vorzugsweise Metallgewebe, Glasfasergewebe, Kohlefasergewebe oder Silikatgewebe, und die zweite Deckschicht 3 als Aluminiumschicht, vorzugsweise Aluminiumfolie, ausgebildet ist.
23. Wärmedämmelement nach einem der Aspekte 1 bis 19, dadurch gekennzeichnet, dass die erste Deckschicht 2 als Gewebe 21, vorzugsweise Metallgewebe, Glasfasergewebe, Kohlefasergewebe oder Silikatgewebe, und die zweite Deckschicht 3 als Polyimidschicht, vorzugsweise Polyimidfolie, ausgebildet ist.
24. Wärmedämmelement nach einem der Aspekte 1 bis 19, dadurch gekennzeichnet, dass die erste Deckschicht 2, 3 als hitzebeständige Glimmerschicht, vorzugsweise Glimmerpapierschicht oder Glimmertafel, und die zweite Deckschicht 3 als Gewebe 21, vorzugsweise Metallgewebe, Glasfasergewebe, Kohlefasergewebe, Silikatgewebe oder Mischgewebe, ausgebildet ist.
25. Wärmedämmelement nach einem der voranstehenden Aspekte, dadurch gekennzeichnet, dass das Wärmedämmelement 1 zusätzlich zu den Deckschichten 2, 3 eine Zusatzschicht 22 aus einem Gewebe 21, vorzugsweise Metallgewebe, Glasfasergewebe, Kohlefasergewebe, Silikatgewebe oder Mischgewebe, aufweist.
26. Wärmedämmelement nach Aspekt 25, dadurch gekennzeichnet, dass die Zusatzschicht 22 außen an dem Wärmedämmelement 1 angeordnet ist.
27. Wärmedämmelement nach einem der voranstehenden Aspekte, dadurch gekennzeichnet, dass die Deckschichten 2, 3 und die Zwischenlage 4 mittels Verkleben miteinander verbunden sind.
28. Wärmedämmelement nach einem der voranstehenden Aspekte, dadurch gekennzeichnet, dass mindestens eine Deckschicht 2, 3 und/oder Zwischenschicht 6 eine elektrische Durchschlagsfestigkeit von mehr als 1 kV/mm, vorzugsweise mehr als 1,5 kV/mm, insbesondere von mehr als 2 kV/mm, aufweist.
29. Wärmedämmelement nach einem der voranstehenden Aspekte, dadurch gekennzeichnet, dass das Wärmedämmelement 1 ein Flächengewicht von weniger als 1500 g/m², vorzugsweise weniger als 1300 g/m², insbesondere weniger als 1000 g/m², aufweist.
30. Wärmedämmelement nach einem der voranstehenden Aspekte, dadurch gekennzeichnet, dass die Faserschicht 5 und/oder die Zwischenlage 4 ein Flächengewicht von weniger als 1000 g/m², vorzugsweise weniger als 800 g/m², insbesondere weniger als 600 g/m², aufweist bzw. aufweisen.
31. Wärmedämmelement nach einem der voranstehenden Aspekte, dadurch gekennzeichnet, dass das Wärmedämmelement 1 und/oder die Faserschicht 5 ein Flächengewicht von mehr als 150 g/m², vorzugsweise mehr als 200 g/m², besonders bevorzugt mehr als 300 oder 400 g/m², aufweist bzw. aufweisen.
32. Wärmedämmelement nach einem der voranstehenden Aspekte, dadurch gekennzeichnet, dass das Wärmedämmelement 1 weniger als 7 mm, vorzugsweise weniger als 6 mm, insbesondere zwischen 2 bis 3 mm, dick ist.
33. Wärmedämmelement nach einem der voranstehenden Aspekte, dadurch gekennzeichnet, dass das Wärmedämmelement 1 eine elektrische Durchschlagsfestigkeit von mehr als 20 kV/mm, vorzugsweise mehr als 30 kV/mm, insbesondere von 40 bis 70 kV/mm, aufweist.
34. Wärmedämmelement nach einem der voranstehenden Aspekte, dadurch gekennzeichnet, dass das Wärmedämmelement 1 auf wenigstens einer Flachseite zumindest abschnittsweise selbstklebend ausgebildet ist oder eine Klebeschicht 7 aufweist.
35. Batterie 8, vorzugsweise Lithium-Ionen-Batterie, insbesondere Traktionsbatterie für ein Elektrofahrzeug,
   mit einem Gehäuse 9, und
   mit wenigstens einem im und/oder am Gehäuse 9 angeordneten mehrschichtigen Wärmedämmelement 1 zur thermischen Isolierung und zum Brandschutz,
   **dadurch gekennzeichnet,**
   dass das Wärmedämmelement 1 nach einem der voranstehenden Aspekte ausgebildet ist.
36. Batterie nach Aspekt 35, dadurch gekennzeichnet, dass das Wärmedämmelement 1 die Batterie 8, das Gehäuse 9, einen Gehäusedeckel 11 und/oder Batteriezellen 12 oberseitig zumindest teilweise, vorzugsweise vollständig bzw. vollflächig, über- oder abdeckt und/oder thermisch isoliert.
37. Batterie nach Aspekt 35 oder 36, dadurch gekennzeichnet, dass das Wärmedämmelement 1 an einem Gehäusedeckel 11 bzw. Gehäuseoberteil des Gehäuses 9 angebracht bzw. befestigt, vorzugsweise angeklebt, ist.
38. Batterie nach Aspekt 36 oder 37, dadurch gekennzeichnet, dass das Wärmedämmelement 1, insbesondere vollflächig, an einer dem Gehäuseinnenraum zugewandten Innenseite 13 des Gehäusedeckels 11 und/oder des Gehäuses 9 angebracht ist.
39. Batterie nach einem der Aspekte 35 bis 38, dadurch gekennzeichnet, dass das Wärmedämmelement 1 zur thermischen Isolierung zwischen zwei benachbarten Batteriezellen 12 der Batterie 8 angeordnet ist.
40. Batterie nach einem der Aspekte 35 bis 39, dadurch gekennzeichnet, dass das Wärmedämmelement 1, insbesondere vollflächig, an einer Unterseite eines Innenraums bzw. einem Boden an der Innenseite 13 des Gehäuses 9 vorgesehen bzw. angeordnet ist.
41. Batterie nach einem der Aspekte 35 bis 40, dadurch gekennzeichnet, dass wenigstens ein erstes Wärmedämmelement 1A und wenigstens ein zweites Wärmedämmelement 1B vorgesehen sind, wobei das erste Wärmedämmelement 1A den Gehäuseinnenraum oberseitig verschließt bzw. thermisch isoliert und das zweite Wärmedämmelement 1B zwischen benachbarten Batteriezellen 12 angeordnet ist.
42. Batterie nach Aspekt 41, dadurch gekennzeichnet, dass das zweite Wärmedämmelement 1B, vorzugsweise quer bzw. senkrecht, am ersten Wärmedämmelement 1A thermisch isolierend angebracht, vorzugsweise angeklebt, vernadelt oder verschweißt, ist.
43. Batterie nach einem der Aspekte 35 bis 42, dadurch gekennzeichnet, dass mehrere Wärmedämmelemente 1B vorgesehen sind, die jeweils zwischen benachbarten Batteriezellen 12 angeordnet sind, insbesondere zwischen allen Batteriezellen 12.
44. Batterie nach einem der Aspekte 35 bis 43, dadurch gekennzeichnet, dass mindestens ein erstes Wärmedämmelement 1A und mindestens ein weiteres bzw. drittes Wärmedämmelement 1C vorgesehen sind, wobei das erste Wärmedämmelement 1A an einer Oberseite eines Innenraums des Gehäuses 9 bzw. an einem Gehäusedeckel 11 des Gehäuses 9 angeordnet ist und das weitere bzw. dritte Wärmedämmelement 1C auf einer Unterseite des Innenraums bzw. an einem Boden an der Innenseite 13 des Gehäuses 9 vorgesehen bzw. angeordnet ist.
45. Batterie nach einem der Aspekte 35 bis 44, dadurch gekennzeichnet, dass mindestens ein erstes Wärmedämmelement 1A und mindestens ein weiteres bzw. viertes Wärmedämmelement 1D vorgesehen sind, wobei das erste Wärmedämmelement 1A an einer Oberseite eines Innenraums 13 des Gehäuses bzw. an einem Gehäusedeckel 11 des Gehäuses 9 angeordnet ist und das weitere bzw. vierte Wärmedämmelement 1D an einer oder mehreren Seitenwänden der Innenseite 13 bzw. des Gehäuses 9 vorgesehen bzw. angeordnet sind.
46. Batterie nach einem der Aspekte 35 bis 45, dadurch gekennzeichnet, dass Batteriezellen 12 der Batterie 8 zumindest im Wesentlichen vollständig und/oder allseitig von einem oder mehreren Wärmedämmelementen 1, 1A, 1B, 1C, 1D umhüllt oder umgeben sind.
47. Batterie nach einem der Aspekte 35 bis 46, dadurch gekennzeichnet, dass die Batterie 8 bzw. das Gehäuse 9 einen Auslass 22 für das Entweichen von Gasen aufweist.
48. Batterie nach Aspekt 47, dadurch gekennzeichnet, dass der Auslass 22 einen Filter 23 und/oder ein Ventil 24 aufweist.
49. Verwendung eines mehrschichtigen Wärmedämmelementes 1 zur thermischen Isolierung einer Batterie 8,
   **dadurch gekennzeichnet,**
   dass ein mehrschichtiges und insgesamt flexibles und kompressibles Wärmedämmelement 1 mit einem langfaserigen, vernadelten Faservlies als Faserschicht 5 und/oder gemäß einem der Aspekte 1 bis 33 zur thermischen Isolierung zwischen benachbarten Batteriezellen 12 und/oder oberhalb von Batteriezellen 12 angeordnet wird.

Einzelne Aspekte der vorliegenden Erfindung können, wie bereits erwähnt, beliebig kombiniert, aber auch unabhängig voneinander realisiert werden.

### Bezugszeichenliste:

- 1: Wärmedämmelement
- 1A: (erstes) Wärmedämmelement
- 1B: (zweites) Wärmedämmelement
- 1C: (drittes) Wärmedämmelement
- 1D: (viertes) Wärmedämmelement
- 2: erste Deckschicht
- 3: zweite Deckschicht
- 4: Zwischenlage
- 5: Faserschicht
- 6: Zwischenschicht
- 7: Klebeschicht
- 8: Batterie
- 9: Gehäuse
- 10: Gehäuseunterteil
- 11: Gehäusedeckel/Gehäuseoberteil
- 12, 12', 12": Batteriezelle
- 13: Innenseite
- 14: Fahrzeug
- 15: Fahrzeuginnenraum
- 16: Heizelement
- 17: Kaltseite senkrecht-vertikal
- 18: Heißseite senkrecht-vertikal
- 19: Kaltseite waagerecht-horizontal (oberhalb der Batterie)
- 20: Heißseite waagerecht-horizontal (oberhalb der Batterie)
- 21: Gewebe
- 22: Zusatzschicht
- 23: Auslass
- 24: Filter
- 25: Ventil

- M: Kurve
- T: Zeit
- X: Achse
- Y: Achse

## Patentansprüche

1. Batterie (8), vorzugsweise Lithium-Ionen-Batterie und/oder Traktionsbatterie für ein Elektrofahrzeug,
mit einem Gehäuse (9), und
mit wenigstens einem im Innenraum des Gehäuses (9) angeordneten mehrschichtigen Wärmedämmelement (1) zur thermischen Isolierung und zum Brandschutz,
wobei das Wärmedämmelement (1) aufweist:
eine erste Deckschicht (2), eine zweite Deckschicht (3), und eine zwischen den Deckschichten (2, 3) angeordnete kompressible und biegsame Zwischenlage (4), die wenigstens eine über 250 °C hitzebeständige Faserschicht (5) aufweist,
wobei die Faserschicht (5) aus einem vernadelten Faservlies gebildet ist, und
wobei mindestens eine Deckschicht (2, 3), insbesondere beide Deckschichten (2, 3), als hitzebeständige Glimmerschicht ausgebildet ist.

2. Batterie nach Anspruch 1, wobei die mindestens eine Deckschicht (2, 3) als Glimmerpapierschicht oder Glimmertafel ausgebildet ist.

3. Batterie nach Anspruch 1 oder 2, wobei die mindestens eine Deckschicht (2, 3) über 250 °C, 500 °C oder 1000 °C hitzebeständig ist.

4. Batterie nach einem der voranstehenden Ansprüche, wobei die mindestens eine Deckschicht weniger als 3 mm, vorzugsweise weniger als 2 mm, insbesondere weniger als 1 mm, ganz besonders bevorzugt zwischen 0,05 und 0,15 mm, dick ist, und/oder wobei das Wärmedämmelement (1) weniger als 7 mm, vorzugsweise weniger als 6 mm, insbesondere zwischen 2 bis 3 mm, dick ist.

5. Batterie nach einem der voranstehenden Ansprüche, wobei beide Deckschichten (2, 3), als hitzebeständige Glimmerschicht, vorzugsweise Glimmerpapierschicht oder Glimmertafel, ausgebildet sind.

6. Batterie nach einem der voranstehenden Ansprüche, wobei die Faserschicht (5) aus Glasfasern oder Silikatfasern oder aus einer Mischung davon hergestellt ist und/oder wobei die Fasern einen mittleren Durchmesser von mindestens 4 µm, vorzugsweise mindestens 5 µm, insbesondere von 6 bis 15 µm, aufweisen.

7. Batterie nach einem der voranstehenden Ansprüche, wobei das Wärmedämmelement (1) eine Schicht aus einem Gewebe (21) aufweist, vorzugsweise wobei das Gewebe (21) Glasfasern, Kohlefasern und/oder Silikatfasern aufweist.

8. Batterie nach einem der voranstehenden Ansprüche, wobei das Wärmedämmelement (1) auf wenigstens einer Flachseite zumindest abschnittsweise selbstklebend ausgebildet ist oder eine Klebeschicht (7) aufweist und/oder wobei das Wärmedämmelement (1), insbesondere vollflächig, an einer dem Gehäuseinnenraum zugewandten Innenseite (13) eines Gehäusedeckel (11) bzw. Gehäuseoberteil des Gehäuses (9) angebracht bzw. befestigt, vorzugsweise angeklebt, ist.

9. Batterie nach einem der voranstehenden Ansprüche, wobei
die Faserschicht (5) und/oder die Zwischenlage (4) ein Flächengewicht von weniger als 1000 g/m², vorzugsweise weniger als 800 g/m², insbesondere weniger als 600 g/m², und/oder mehr als 150 g/m², vorzugsweise mehr als 200 g/m², besonders bevorzugt mehr als 300 oder 400 g/m², aufweist bzw. aufweisen, und/oder
das Wärmedämmelement (1) ein Flächengewicht von weniger als 1500 g/m², vorzugsweise weniger als 1300 g/m², insbesondere weniger als 1000 g/m², und/oder mehr als 150 g/m², vorzugsweise mehr als 200 g/m², besonders bevorzugt mehr als 300 oder 400 g/m², aufweist.

10. Batterie nach einem der voranstehenden Ansprüche, wobei mindestens eine Deckschicht (2, 3) eine elektrische Durchschlagsfestigkeit von mehr als 1 kV/mm, vorzugsweise mehr als 1,5 kV/mm, insbesondere von mehr als 2 kV/mm, aufweist.

11. Batterie nach einem der voranstehenden Ansprüche, wobei das Wärmedämmelement (1) eine Stauchhärte von weniger als 40 kPa, vorzugsweise weniger als 30 kPa, insbesondere weniger als 20 kPa, aufweist.

12. Batterie nach einem der voranstehenden Ansprüche, wobei das Wärmedämmelement (1) zur thermischen Isolierung zwischen zwei benachbarten Batteriezellen (12) der Batterie (8) und/oder oberhalb von Batteriezellen (12) angeordnet ist.

13. Batterie nach einem der voranstehenden Ansprüche, wobei Batteriezellen (12) der Batterie (8) zumindest im Wesentlichen vollständig und/oder allseitig von einem oder mehreren Wärmedämmelementen (1) umhüllt oder umgeben sind.

14. Batterie nach einem der voranstehenden Ansprüche, wobei die Batterie (8) bzw. das Gehäuse (9) einen Auslass (22) für das Entweichen von Gasen aufweist.

15. Verwendung eines mehrschichtigen Wärmedämmelementes (1) zur thermischen Isolierung einer Batterie (8), vorzugsweise wobei das mehrschichtige Wärmedämmelement wie in einem der voranstehenden Ansprüche beschrieben ausgebildet ist,
**dadurch gekennzeichnet,**
**dass** das Wärmedämmelement (1) zwischen benachbarten Batteriezellen (12) und/oder oberhalb von Batteriezellen (12) angeordnet wird,
wobei das Wärmedämmelement (1) aufweist:
eine erste Deckschicht (2), eine zweite Deckschicht (3), und eine zwischen den Deckschichten (2, 3) angeordnete kompressible und biegsame Zwischenlage (4), die wenigstens eine über 250 °C hitzebeständige Faserschicht (5) aufweist,
wobei die Faserschicht (5) aus einem vernadelten Faservlies gebildet ist, und
wobei mindestens eine Deckschicht (2, 3), insbesondere beide Deckschichten (2, 3), als hitzebeständige Glimmerschicht vorzugsweise Glimmerpapierschicht oder Glimmertafel, ausgebildet ist/sind.
